(19) Europäisches Patentamt
European Patent Office
Office européen des brevets

(11) **EP 4 580 076 A1**

(12) **EUROPEAN PATENT APPLICATION**
published in accordance with Art. 153(4) EPC

(43) Date of publication:
02.07.2025 Bulletin 2025/27

(21) Application number: 23857069.1

(22) Date of filing: 24.07.2023

(51) International Patent Classification (IPC):
$H04B\ 7/024^{(2017.01)}$    $H04B\ 7/0417^{(2017.01)}$
$H04W\ 24/10^{(2009.01)}$    $H04W\ 28/16^{(2009.01)}$
$H04W\ 72/0457^{(2023.01)}$

(52) Cooperative Patent Classification (CPC):
H04B 7/024; H04B 7/0417; H04W 24/10;
H04W 28/16; H04W 72/0457

(86) International application number:
PCT/JP2023/026957

(87) International publication number:
WO 2024/042953 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.08.2022 JP 2022133337

(71) Applicant: NTT DOCOMO, INC.
Tokyo 100-6150 (JP)

(72) Inventors:
• MATSUMURA, Yuki
Tokyo 100-6150 (JP)
• NAGATA, Satoshi
Tokyo 100-6150 (JP)
• WANG, Jing
Beijing 100190 (CN)
• CHEN, Lan
Beijing 100190 (CN)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57) A terminal according to one aspect of the present disclosure includes a receiving section that receives a configuration of a report of channel state information (CSI) for a plurality of transmission points, and a control section that determines a position and a bit-width for a plurality of indicators in the CSI, in accordance with at least one of a transmission point, a layer, an indicator in the CSI, and the number of the plurality of transmission points.

Option 1

| CRI for selected CJT TRPs, if reported |
| --- |

Option 2

| CRI of strongest TRP, if reported |
| --- |
| CRI of $2^{nd}$ strongest TRP, if reported |
| CRI of $3^{rd}$ strongest TRP, if reported |
| CRI of $4^{th}$ strongest TRP, if reported |

FIG. 12

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), reporting of channel state information (CSI) based on reference signal reception is under study. It is also studied that a plurality of transmission/reception points (multiple Transmission/Reception Points (TRPs), multi-TRP (MTRP)) or a plurality of panels (multiple panels, multi-panel) perform DL transmission to a terminal (user terminal, User Equipment (UE)). Coherent joint transmission (CJT) using multi-TRP/multi-panel is also under study.

Meanwhile, studies have not sufficiently been made on CSI/codebook for CJT. Unless such a method is defined clearly, communication throughput, communication quality, and the like may deteriorate.

In view of this, an object of the present disclosure is to provide a terminal, a radio communication method, and a base station that determine appropriate CSI/codebook for CJT.

Solution to Problem

A terminal according to one aspect of the present disclosure includes a receiving section that receives a configuration of a report of channel state information (CSI) for a plurality of transmission points, and a control section that determines a position and a bit-width for a plurality of indicators in the CSI, in accordance with at least one of a transmission point, a layer, an indicator in the CSI, and the number of the plurality of transmission points.

Advantageous Effects of Invention

An aspect of the present disclosure allows appropriate CSI/codebook for CJT to be determined.

Brief Description of Drawings

[FIG. 1] FIG. 1 shows an example of a 16-level quantization table.
[FIG. 2] FIG. 2 shows an example of an 8-level quantization table.
[FIG. 3] FIG. 3 shows an example of a bit-width of information fields $X_1$ of a PMI of an enhanced type 2 codebook.
[FIG. 4] FIG. 4 shows an example of a bit-width of information fields $X_2$ of a PMI of an enhanced type 2 codebook.

[FIG. 5] FIG. 5 shows an example of mapping order of CSI fields of CSI part 1 of one CSI report in UCI on a PUCCH.

[FIG. 6] FIG. 6 shows an example of mapping order of CSI fields of CSI part 1 of one CSI report in UCI on a PUSCH.

[FIG. 7] FIG. 7 shows an example of mapping order of CSI fields of CSI part 2 of one CSI report in UCI on a PUSCH.

[FIG. 8] FIGS. 8A and 8B show examples of an enhanced type 2 port selection codebook.

[FIG. 9] FIGS. 9A and 9B show examples of an enhanced type 2 port selection codebook.

[FIG. 10] FIGS. 10A and 10B show examples of CMR pairs for NCJT CSI.

[FIG. 11] FIGS. 11A to 11C show examples of mapping order of a plurality of fields in one CSI report for NCJT CSI.

[FIG. 12] FIG. 12 shows an example of a change of CSI part 1 on the PUCCH according to Embodiment #1.

[FIG. 13] FIG. 13 shows another example of a change of CSI part 1 on the PUCCH according to Embodiment #1.

[FIG. 14] FIG. 14 shows an example of a change of CSI part 1 on the PUSCH according to Embodiment #1.

[FIG. 15] FIG. 15 shows another example of a change of CSI part 1 on the PUSCH according to Embodiment #1.

[FIG. 16] FIG. 16 shows an example of a bit-width of option 1 of type 2 CJT CSI according to Embodiment #2.

[FIG. 17] FIG. 17 shows an example of a bit-width of option 2a of type 2 CJT CSI according to Embodiment #2.

[FIG. 18] FIG. 18 shows another example of a bit-width of option 2a of type 2 CJT CSI according to Embodiment #2.

[FIG. 19] FIG. 19 shows yet another example of a bit-width of option 2a of type 2 CJT CSI according to Embodiment #2.

[FIG. 20] FIG. 20 shows an example of a change of option 2b of type 2 CJT CSI according to Embodiment #2.

[FIG. 21] FIG. 21 shows an example of a bit-width of a plurality of PMI fields $X_2$ according to Embodiment #2.

[FIG. 22] FIG. 22 shows an example of a change of CSI part 2 according to Embodiment #2.

[FIG. 23] FIG. 23 shows another example of a change of CSI part 2 according to Embodiment #2.

[FIG. 24] FIG. 24 shows an example of a new report content bit-width in a plurality of PMI fields $X_2$ according to Embodiment #3.

[FIG. 25] FIG. 25 shows an example of a change of CSI part 1 on the PUSCH according to Embodiment #3.

[FIG. 26] FIG. 26 is a diagram to show an example of a schematic structure of a radio communication system according to one embodiment.

[FIG. 27] FIG. 27 is a diagram to show an example of a structure of a base station according to one embodiment.

[FIG. 28] FIG. 28 is a diagram to show an example of a structure of a user terminal according to one embodiment.

[FIG. 29] FIG. 29 is a diagram to show an example of a hardware structure of the base station and the user terminal according to one embodiment.

[FIG. 30] FIG. 30 is a diagram to show an example of a vehicle according to one embodiment.

Description of Embodiments

(Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be used.

In NCJT, for example, TRP 1 performs modulation mapping on a first codeword, performs layer mapping, and transmits a first PDSCH in a first number of layers (for example, two layers) by using first precoding. TRP 2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. The plurality of PDSCHs from the multi-TRP may be separately scheduled by using a plurality of pieces of DCI (multi-DCI (M-DCI), multi-PDCCH (multiple PDCCHs)) (multi-master mode). The plurality of pieces of DCI may be transmitted from the respective multi-TRP. The UE may assume that separate CSI reports related to respective TRPs are transmitted to different TRPs. Such CSI feedback may be referred to as separate feedback, separate CSI feedback, and the like. In the present disclosure, "separate" may be interchangeably interpreted as "independent."

Note that CSI feedback for transmitting, for one TRP, a CSI report related to both TRPs may be used. Such CSI feedback may be referred to as joint feedback, joint CSI feedback, and the like.

For example, in a case of the separate feedback, the UE is configured to transmit a CSI report for TRP #1 to TRP #1 by using a certain PUCCH (PUCCH 1) and to transmit a CSI report for TRP #2 to TRP #2 by using another PUCCH (PUCCH 2). In a case of the joint feedback, the UE transmits, to TRP #1 or #2, a CSI report for TRP #1 and a CSI report for TRP #2.

According to such a multi-TRP scenario, more flexible transmission control using a channel with satisfactory quality is available.

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication $i_1$ may be reported for the entire CSI reporting band, and subband indication (one subband indication) $i_2$ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N $\geq$ 1) report settings for CSI report configuration and M (M $\geq$ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

(Codebook Configuration)

The UE is configured with a codebook-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook out of a plurality of codebooks including a type 1 single panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) (Restriction).

Configuration of the CBSR is a bit indicating, for a precoder associated with a CBSR bit, which PMI report is allowed ("1") and which PMI report is not allowed ("0"). 1 bit of a CBSR bitmap corresponds to one codebook index / antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesFor-Interference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of Options 1 and 2 below is under study.

<Option 1>

The UE is configured to report X (X = 0, 1, 2) pieces of CSI associated with single TRP measurement hypotheses and one piece of CSI associated with NCJT measurement. When X = 2, two pieces of CSI are associated with two different single TRP measurements using CMRs of different CMR groups.

<Option 2>

The UE may be configured to report one piece of CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when the Options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

(Type 1 Codebook)

As the type 1 codebook (Rel. 15), a type 1 single-panel codebook and a type 1 multi-panel codebook are defined for a base station panel. In a type 1 single panel, an antenna model of a CSI antenna port array (logical configuration) is defined for the number $P_{CSI-RS}$ of CSI-RS antenna ports and $(N_1, N_2)$. In type 1 multi-panel, an antenna model of a CSI antenna port array (logical configuration) is defined for the number $P_{CSI-RS}$ of CSI-RS antenna ports and $(N_g, N_1, N_2)$.

For Rel-15 type 1 single-panel CSI, a higher layer parameter of a codebook type (subType in type1 in codebookType in CodebookConfig) is set to a type 1 single panel ('type1-SinglePanel') for the UE. When the number $v$ of layers $\in \{2, 3, 4\}$ is not satisfied, PMI values correspond to three codebook indices $i_{1,1}, i_{1,2}, i_2$. When the number $v$ of layers $\in \{2, 3, 4\}$ is satisfied, PMI values correspond to four codebook indices $i_{1,1}, i_{1,2}, i_{1,3}, i_2$. When the number $v$ of layers $\in \{2, 3, 4\}$ is not satisfied, composite codebook index $i_1 = [i_{1,1}, i_{1,2}]$. When the number $v$ of layers $\in \{2, 3, 4\}$ is satisfied, composite codebook index $i_1 = [i_{1,1}, i_{1,2}, i_{1,3}]$.

For the number $P_{CSI-RS}$ of CSI antenna ports, supported configurations (value combinations) of $(N_1, N_2)$ and $(O_1, O_2)$ are defined in a specification. $(N_1, N_2)$ indicates the number of two-dimensional antenna elements, and is configured by n1-n2 in moreThanTwo in nrOfAntennaPorts in type1-SinglePanel. $(O_1, O_2)$ is a two-dimensional oversampling factor. $i_{1,1}$ corresponding to a horizontal beam is $\{0, 1, ..., N_1O_1-1\}$. $i_{1,2}$ corresponding to a vertical beam is $\{0, 1, ..., N_2O_2-1\}$. $i_2$ is $\{0, 1, 2, 3\}$. For codebookMode=1, a matrix for a 1-layer CSI report codebook using antenna ports 3000 to $2999+P_{CSI-RS}$ is $W\_i_{1,1}, i_{1,2}, i_2{}^{(1)}$. Here, $W_{l,m,n}{}^{(1)}$ is given by the following equation.

$$W_{l,m,n}^{(1)} = \frac{1}{\sqrt{P_{\text{CSI-RS}}}} \begin{bmatrix} v_{l,m} \\ \varphi_n v_{l,m} \end{bmatrix} \qquad (X1)$$

For Rel-15 type 1 multi-panel CSI, as compared with that for the type 1 single panel, the number $N_g$ of panels is configured in addition to $N_1$, $N_2$. As inter-panel co-phasing (phase compensation between panels, phasing / phase difference between panels), $i_{1,4}$ is additionally reported. The same SD beam (precoding matrix $W_1$) is selected for each panel, and only inter-panel co-phasing is additionally reported.

For the number $P_{CSI-RS}$ of CSI antenna ports, supported configurations (value combinations) of $(N_g, N_1, N_2)$ and $(O_1, O_2)$ are defined in a specification. $(N_1, N_2)$ is configured by ng-n1-n2 in typeI-MultiPanel. $i_{1,1}$ is $\{0, 1, ..., N_1O_1-1\}$. $i_{1,2}$ is $\{0, 1, ..., N_2O_2-1\}$. For q=1, ..., $N_g$-1, $i_{1,4,q}$ is $\{0, 1, 2, 3\}$. $i_2$ is $\{0, 1, 2, 3\}$. For codebookMode=1, a matrix for a 1-layer CSI report codebook using antenna ports 3000 to 2999+$P_{CSI-RS}$ is $W\_i_{1,1}, i_{1,2}, i_{1,4}, i_2{}^{(1)}$. Here, $W_{l,m,p,n}{}^{(1)} = W_{l,m,p,n}{}^{1,N_g,1}$.

$W\_l,m,p,n^{1,N_g,1}$ and $W\_l,m,p,n^{2,N_g,1}$ for $N_g=\{2, 4\}$ (matrix $W_{l,m,p,n}{}^{1,2,1}$ for the first layer, $N_g$=2, codeBookMode=1, matrix $W_{l,m,p,n}{}^{2,2,1}$ for the second layer, $N_g$=2, codeBookMode=1, matrix $W_{l,m,p,n}{}^{1,4,1}$ for the first layer, $N_g$=4, codeBookMode=1, and matrix $W_{l,m,p,n}{}^{2,4,1}$ for the second layer, $N_g$=4, codeBookMode=1) are given by the following equations.

$$W_{l,m,p,n}^{1,2,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \qquad W_{l,m,p,n}^{2,2,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W_{l,m,p,n}^{1,4,1} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \qquad W_{l,m,p,n}^{2,4,1} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

$$(X2)$$

Here, $\varphi_n = e^{j\pi n/2}$. For $N_g$=2, p = $p_1$, and for $N_g$=4, p = $[p_1, p_2, p_3]$. $\varphi\_p_1$, and $\varphi\_p_3$ indicate inter-panel co-phasing. The same beam (SD beam matrix, precoding matrix $W_1$) is selected for panels 0, 1, 2, and 3, and $\varphi\_p_1$, $\varphi\_p_2$, and $\varphi\_p_3$ indicate phase compensation for panel 1, phase compensation for panel 2, and phase compensation for panel 3 relative to panel 0, respectively.

(Type 2 Codebook)

In the present disclosure, matrix Z with X rows and Y columns is sometimes expressed as Z(X×Y).

For type 2 CSI of Rel. 15, generation of per-subband (SB-wise) precoding vectors is based on the following equation for given layer k.

$$W_k(N_t \times N_3) = W_1 W_{2,k} \qquad (Y1)$$

Nt is the number of ports. $N_3$ is a total number of precoding matrices (precoders) (number of subbands) indicated by a PMI. $W_1(N_t \times 2L)$ is a matrix (SD beam matrix) formed by $L \in \{2, 4\}$ (oversampled) spatial domain (SD) two-dimensional (2D) DFT vectors (SD beams, 2D-DFT vectors). L is the number of beams. For example, L=2 SD 2D-DFT vectors are $b_i$ and $b_j$. $W_{2,r}(2L \times N_3)$ is a matrix (LC coefficient matrix) formed by linear combination coefficients (LC coefficients, subband complex LC coefficients, combination coefficients) for layer k. $W_{2,k}$ indicates beam selection and co-phasing between two polarizations. For example, two $W_{2,k}$ are $c_i$ and $c_j$. For example, channel matrix h is approximated by linear combination of L=2 SD 2D-DFT vectors $c_i b_i$, $+c_j b_j$. Feedback overhead is primarily caused by LC coefficient matrix $W_{2,k}$. The type 2 CSI of Rel. 15 supports only ranks 1 and 2.

In the type 2 CSI, a channel (channel matrix) for a certain user is expressed by a linear combination of two polarizations and L beams (L 2D-DFT vectors). The type 2 CSI of Rel. 15 supports ranks 1 and 2.

(Enhancement of Type 2 Codebook)

Type 2 CSI (enhanced type 2 codebook) of Rel. 16 reduces overhead related to $W_{2,k}$ by using frequency domain (FD) compression. The type 2 CSI of Rel. 16 supports ranks 3 and 4 in addition to ranks 1 and 2.

For the type 2 CSI of Rel. 16, information based on the following equation may be reported by the UE for given layer k.

$$W_k = W_1 \tilde{W}_k W_{f,k}^H \qquad (Y2)$$

$W_{2,k}$ is approximated by $\tilde{W}_x W_{f,k}^H$. Matrix $\tilde{W}$ may be expressed by adding ~ to the top of W (tilde on w). $\tilde{W}_k$ may be expressed as $\tilde{W}_{2,R}$. Matrix $W_{f,k}^H$ is an adjoint matrix of $W_{f,k}$.

For a CSI report, the UE may be configured with one of two subband sizes. The subband (CQI subband) may be defined as $N_{PRB}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.

$W_1(N_t \times 2L)$ is a matrix formed by a plurality of (oversampled) spatial domain (SD) 2D-DFT (vectors, beams). For this matrix, a plurality of indices of two-dimensional discrete Fourier transform (2D-DFT) vectors and a two-dimensional over-sampling factor are reported. Response/distribution of a spatial domain indicated by an SD 2D-DFT vector may be referred to as an SD beam.

$\tilde{W}_k(2L \times M_v)$ is a matrix formed by LC coefficients. For this matrix, up to $K_0$ non-zero coefficients (NZCs, non-zero amplitude LC coefficients) are reported. The report is formed by two parts: a bitmap for identifying an NZC location, and a quantized NZC.

$W_{f,k}(N_3 \times M_v)$ is a matrix formed by a plurality of frequency domain (FD) bases (vectors) for layer k. $M_v$ FD bases (FD DFT bases) are present for each layer. When $N_3 > 19$, $M_v$ DFTs from an intermediate subset (InS) of size $N_3'$ ($<N_3$) are selected. When $N_3 \leq 19$, $\log_2(C(N_3-1, M_v-1))$ bits are reported. Here, $C(N_3-1, M_v-1)$ indicates the number of combinations to select $M_v-1$ from $N_3-1$ (combinatorial coefficient $C(x, y)$), and is also referred to as binomial coefficients. Response/distribution (frequency response) of a frequency domain indicated by an FD base vector and linear combination of LC coefficients may be referred to as an FD beam. The FD beam may correspond to a delay profile (time response).

A subset of FD bases is given as $\{f_1, ..., f_{M\_v}\}$. Here, $f_i$ is the i-th FD base for the k (K = 1, ..., v)-th layer, and $i \in \{1, ..., M_v\}$. A PMI subband size is given by a CQI subband size / R, and $R \in \{1, 2\}$. The number $M_v$ of FD bases for given rank v is given by ceil ($p_v \times N_3/R$). The number of FD bases is the same for all the layers $k \in \{1, 2, 3, 4\}$. $p_v$ is configured by a higher layer.

Each row of matrix $W_{2,k}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD bases. For example, when $M_v = 2$, by using FD bases $f_2$, $f_q$ and LC coefficients $d_1^0$, $d_2^0$, frequency response associated with SD beam $b_0$ is approximated by $d_1^0 f_2 +$, $d_2^0 f_q$.

$M_v$ FD bases are selected for the highest gain. With $M_v << N_3$, overhead of $\tilde{W}_k$ is much smaller than overhead of $W_{2,k}$. All or some of the $M_v$ FD bases are used to approximate frequency response of each SD beam. A bitmap is used to report only an FD base selected for each SD beam. If no bitmap is reported, all the FD bases are selected for each SD beam. In this case, NZCs of all the FD bases are reported for each SD beam. A maximum number of NZCs in one layer $K_k^{NZ} \leq K_0 =$ ceil ($\beta \times 2LM_v$), and a maximum number of NZCs over all the layers $K^{NZ} \leq 2K_0 =$ ceil($\beta \times 2LM_v$). $\beta$ is configured by a higher layer.

Each reported LC coefficient (complex coefficient) in $W^{\sim}_k$ is expressed by separately quantized amplitude and phase.

{Amplitude Quantization}

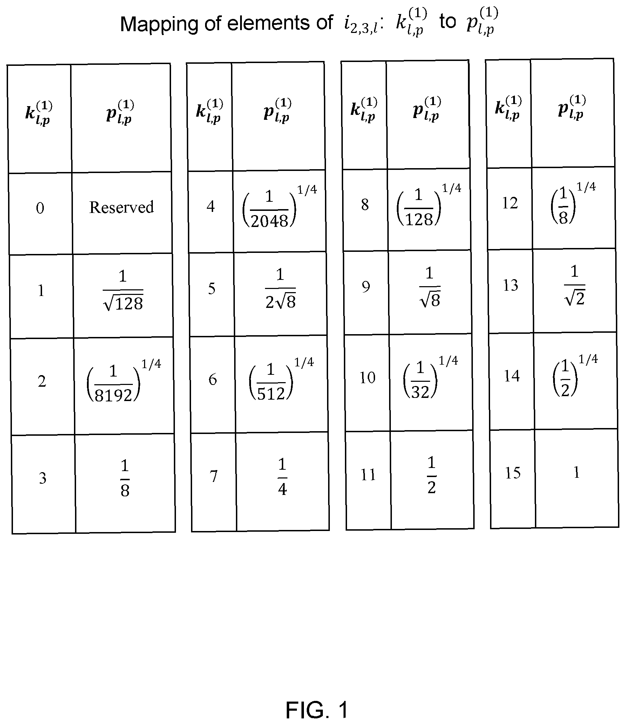

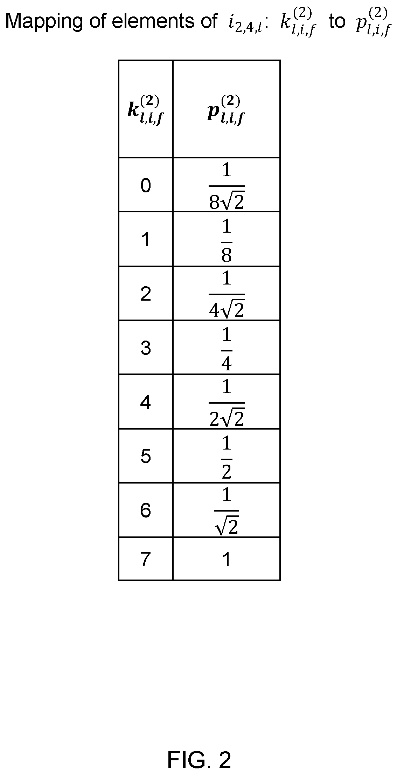

Polarization-specific reference amplitude is 16-level quantization using a table of FIG. 1 (mapping of a plurality of elements of amplitude coefficient indicator $i_{2,3,l}$: mapping from element $k_{l,p}^{(1)}$ to amplitude coefficient $p_{l,p}^{(1)}$). All the other coefficients are 8-level quantization using a table of FIG. 2 (mapping of a plurality of elements of amplitude coefficient indicator $i_{2,4,l}$: mapping from element $k_{l,i,f}^{(2)}$ to amplitude coefficient $p_{l,i,f}^{(2)}$).

{Phase Quantization}

All the coefficients are quantized by using 16-PSK. For example, $\varphi_{l,i} = \exp(j2\pi c_{l,i}/16)$, $c_{l,i} \in \{0, ..., 15\}$. Here, $c_{l,i}$ is a phase coefficient reported by the UE (using 4 bits) for associated phase value $\varphi_{l,i}$.

Type 2 CSI feedback on a PUSCH in Rel. 16 includes two parts. CSI part 1 has a fixed payload size, and is used to identify the number of information bits in CSI part 2. A size of part 2 is variable (a UCI size depends on the number of NZCs and the number is not known to the base station). In CSI part 1, the UE reports the number of NZCs that determines the size of CSI part 2. After receiving CSI part 1, the base station recognizes the size of CSI part 2.

In enhanced type 2 CSI feedback, CSI part 1 includes an RI, a CQI, and an indication of a total number of non-zero amplitudes (NZCs) over a plurality of layers for enhanced type 2 CSI. Fields of Part 1 are separately coded. CSI part 2 includes a PMI of enhanced type 2 CSI. Parts 1 and 2 are separately coded. CSI part 2 (PMI) includes at least one of an oversampling factor, an index of a 2D-DFT base, an index $M_{initial}$ of an initial DFT base (start offset) of a selected DFT window, a DFT base selected for each layer, an NZC (amplitude and phase) per layer, a strongest (maximum strength) coefficient indicator (SCI) per layer, and amplitude of the strongest coefficient per layer / per polarization.

A plurality of PMI indices (PMI values, codebook indices) associated with different pieces of CSI part 2 information may follow the following for the k-th layer.

- $i_{1,1}$: oversampling factor
- $i_{1,2}$: plurality of indices of 2D-DFT bases
- $i_{1,5}$: index (start offset) $M_{initial}$ of initial DFT base of selected DFT window
- $i_{1,6,k}$: DFT base selected for k-th layer
- $i_{1,7,k}$: bitmap for k-th layer
- $i_{1,8,k}$: strongest (maximum strength) coefficient indicator (SCI) for k-th layer
- $i_{2,3,k}$: amplitude of strongest coefficient (for both polarizations) for k-th layer
- $i_{2,4,k}$: amplitude of reported coefficient for k-th layer
- $i_{2,5,k}$: phase of reported coefficient for k-th layer

$i_{1,5}$ and $i_{1,6,k}$ are PMI indices for DFT base reporting. $i_{1,5}$ is reported only when $N_3 > 19$.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ (l = 1, ..., v)
- Group 1: highest (higher) $v2LM_v$-floor($K^{NZ}/2$) priority elements in index $i_{1,5}$ (if reported) and indices $i_{1,6,l}$ and $i_{1,7,l}$ (if reported), highest (higher) ceil ($K^{NZ}/2$)-v priority elements in $i_{2,3,l}$ and $i_{2,4,l}$, and highest (higher) ceil ($K^{NZ}/2$)-v priority elements in $i_{2,5,l}$ (l = 1, ..., v)
- Group 2: lowest (lower) floor ($K^{NZ}/2$) priority elements in $i_{1,7,l}$, lowest (lower) floor ($K^{NZ}/2$) priority elements in $i_{2,4,l}$, and lowest (lower) floor ($K^{NZ}/2$) priority elements in $i_{2,5,l}$ (l = 1, ..., v)

In type 1 CSI, an SD beam indicated by an SD DFT vector is transmitted to the UE. In type 2 CSI, L SD beams are linearly coupled and transmitted to the UE. Each SD beam can be associated with a plurality of FD beams. For corresponding SD beams, channel frequency response can be obtained by using linear combination of FD base vectors for the SD beams. The channel frequency response corresponds to the power delay profile.

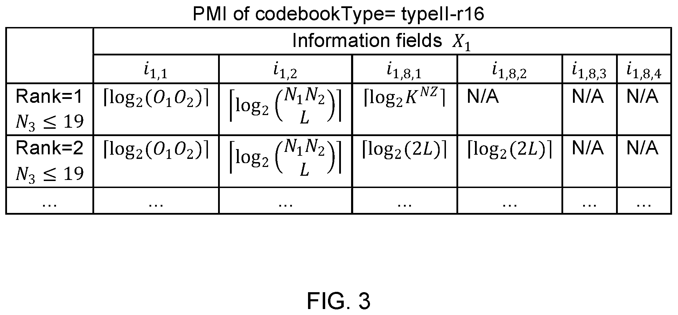

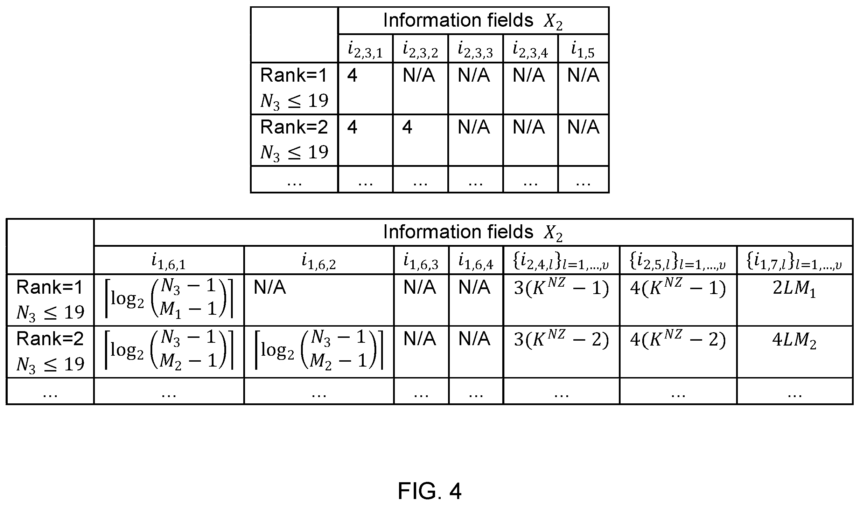

The PMI of the enhanced type 2 codebook is represented by information fields $X_1$ and $X_2$. The bit-widths of $i_{1,1}$, $i_{1,2}$, $i_{1,8,1}$, $i_{1,8,2}$, $i_{1,8,3}$, and $i_{1,8,4}$ in the information fields $X_1$ are given in FIG. 3. $i_{1,1}$ and $i_{1,2}$ are indicators of SD bases. $i_{1,8,1}$, $i_{1,8,2}$, $i_{1,8,3}$, and $i_{1,8,4}$ are indicators of SCIs for each layer. The bit-widths of $i_{2,3,1}$, $i_{2,3,2}$, $i_{2,3,3}$, $i_{2,3,4}$, $i_{1,5}$, $i_{1,6,1}$, $i_{1,6,2}$, $i_{1,6,3}$, $i_{1,6,4}$, $\{i_{2,4,l}\}_{l=1...v}$, $\{i_{2,5,l}\}_{l=1...v}$, and $\{i_{2,7,l}\}_{l=1...v}$ in the information fields $X_2$ are given in FIG. 4. $i_{2,3,1}$, $i_{2,3,2}$, $i_{2,3,3}$, and $i_{2,3,4}$ are amplitudes of SCIs for each layer. $i_{1,5}$ is a window of an FD base. $i_{1,6,1}$, $i_{1,6,2}$, $i_{1,6,3}$, and $i_{1,6,4}$ are selected FD bases for each layer. $\{i_{2,4,l}\}_{l=1...v}$ is an amplitude of another coefficient (other than the SCI) for each layer. $\{i_{2,5,l}\}_{l=1...v}$ is a phase of another coefficient (other than the SCI) for each layer. $\{i_{2,7,l}\}_{l=1...v}$ is a bitmap for the NZC.

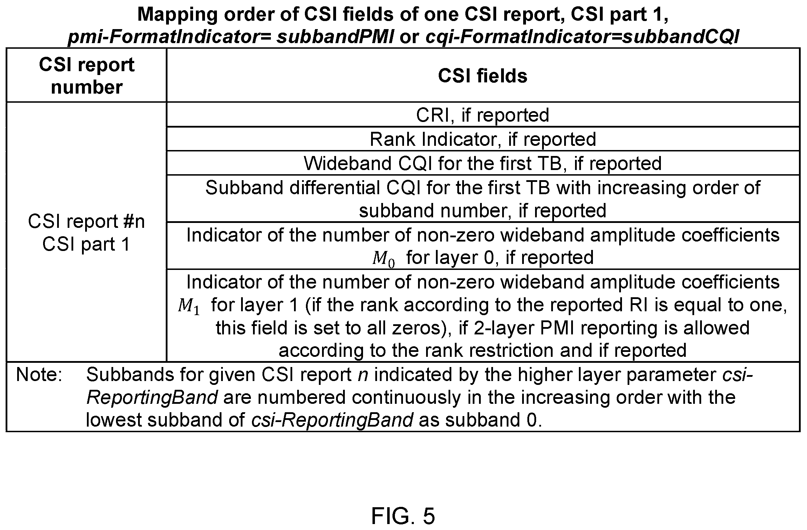

FIG. 5 shows an example of mapping order of CSI fields of CSI part 1 of one CSI report #n for pmi-FormatIndicator = subbandPMI or cqi-FormatIndicator = subbandCQI in UCI on the PUCCH.

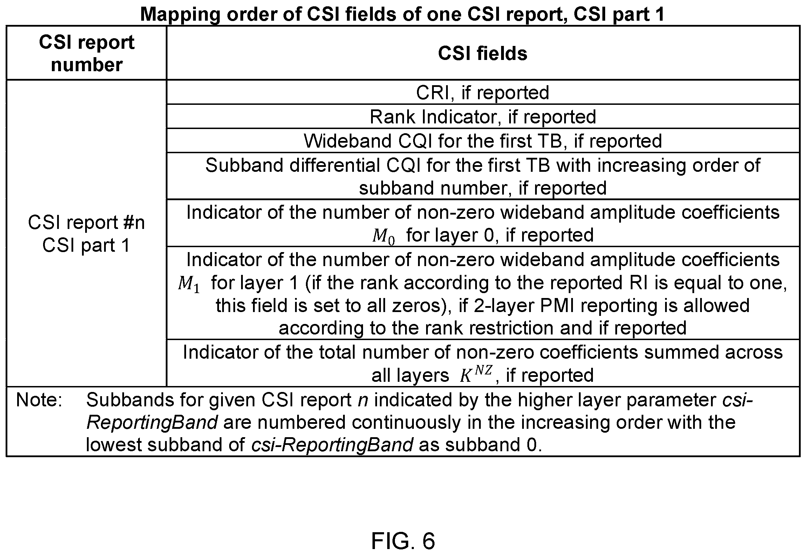

FIG. 6 shows an example of mapping order of CSI fields of CSI part 1 of one CSI report #n in UCI on the PUSCH. The mapping order is different from the mapping order of CSI part 1 on the PUCCH in inclusion of an indicator of the total number of NZCs that is summed across all of the layers.

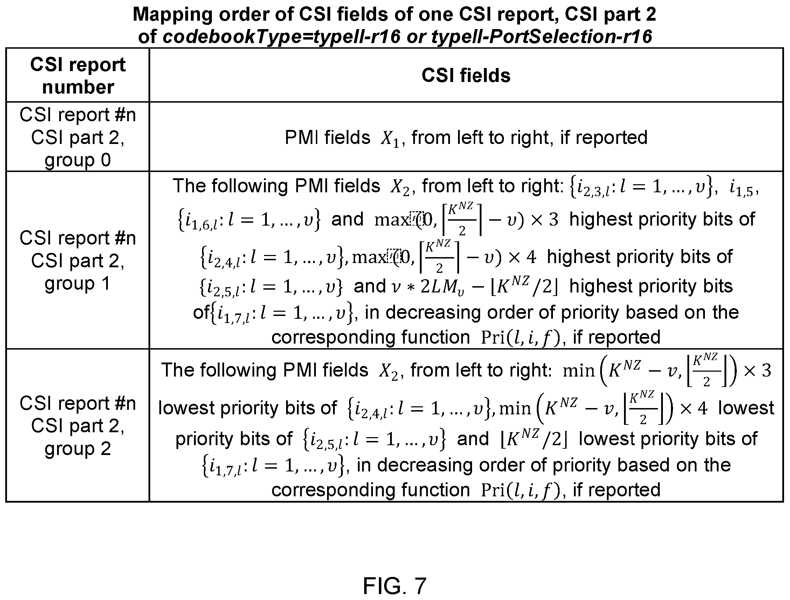

FIG. 7 shows an example of mapping order of CSI fields of CSI part 2 of one CSI report #n of codebookType = typeII-r16 or typeII-PortSelection-r16 in UCI on the PUSCH. The order of the indicators included in the plurality of PMI fields $X_1$ and the plurality of PMI fields $X_2$ is determined according to the above-described bit-width tables.

(Enhancement and Further Enhancement of Type 2 Port Selection Codebook)

In type 2 port selection (PS) CSI (type 2 PS codebook) of Rel. 15, the UE need not derive the SD beam in consideration of 2D-DFT as in the type 2 CSI. The base station transmits the CSI-RS by using K beamformed CSI-RS ports in consideration of a set of SD beams. The UE selects/identifies the best L ($\leq$ K) CSI-RS ports for each polarization, and reports indices thereof in $W_1$. The type 2PS CSI of Rel. 15 supports ranks 1 and 2.

Operation of the type 2PS CSI (enhanced type 2 PS codebook) of Rel. 16 is similar to that of the type 2 CSI of Rel. 16 except for selection of the SD beam. The type 2PS CSI of Rel. 15 supports ranks 1 to 4.

For layer k $\in$ {1, 2, 3, 4}, per-subband (subband (SB)-wise) precoder generation is given by the following equation.

$$W_k(N_t \times N_3) \;=\; QW_1W^{\sim}{}_kW_{f,k}{}^H \;(Y3)$$

Here, Q(Nt×K) indicates K SD beams used for CSI-RS beamforming. $W_1$(K×2L) is a block diagonal matrix. $W^{\sim}{}_k$ (2L×M) is an LC coefficient matrix. $W_{f,k}$(N$_3$×M) is formed by N$_3$ DFT base vectors (FD base vectors). K is configured by a higher layer. L is configured by a higher layer. $P_{CSI\text{-}RS} \in$ {4, 8, 12, 16, 24, 32}. When $P_{CSI\text{-}RS}$ > 4, L $\in$ {2, 3, 4}.

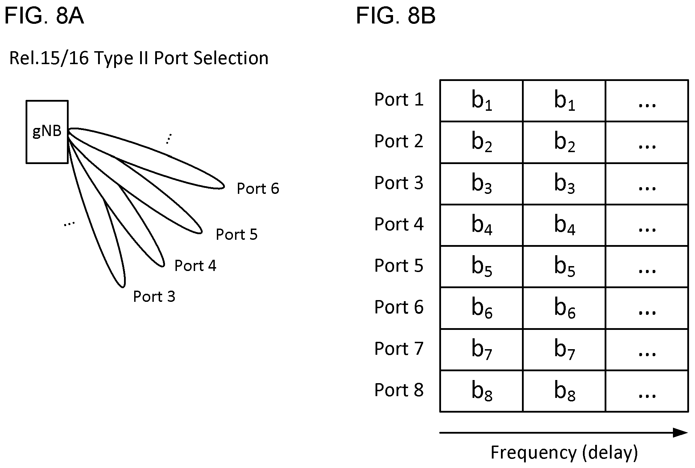

In the type 2PS CSI of Rel. 15/16, each CSI-RS port #i is associated with an SD beam ($b_i$) (FIGS. 8A and 8B).

The type 2PS CSI of Rel. 16 reduces overhead in comparison to the type 2PS CSI of Rel. 15 by reducing the number of FD bases from N$_3$ to M$_v$ similarly to the type 2 CSI of Rel. 16 (M$_v$ << N$_3$).

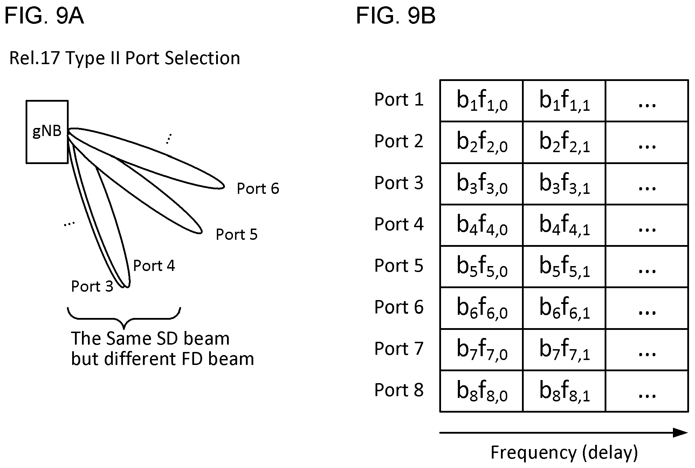

In the type 2 port selection CSI/codebook of Rel. 17 (further enhanced (continuously enhanced) type 2 port selection codebook), each CSI-RS port #i is associated with an SD-FD beam pair (pair of SD beam $b_i$ and FD beam $f_{i,j}$ (where j is a frequency index)) in place of an SD beam (FIGS. 9A and 9B). In this example, ports 3 and 4 are associated with the same SD beam and are associated with different FD beams.

Frequency selectivity of channel frequency response observed by the UE, based on an SD beam-FD beam pair can be reduced by delay pre-compensation more than frequency selectivity of channel frequency response observed by the UE, based on an SD beam.

A primary scenario for the type 2 port selection codebook of Rel. 17 is FDD. Channel reciprocity based on SRS measurement is incomplete (angles of a UL beam and a DL beam may be different, a UL frequency and a DL frequency are different in FDD, and effective antenna intervals are different in the UL frequency and the DL frequency). However, the base station can obtain/select some pieces of partial information (a dominant angle and a delay (an SD beam and an FD beam)). By using SRS measurement by the base station in addition to CSI reporting, the base station can obtain CSI for determination of a DL MIMO precoder. In this case, some CSI reports may be omitted to reduce CSI overhead.

In type 2 PS CSI of Rel. 17, each CSI-RS port is beamformed by using an SD beam and an FD base vector. Each port is associated with an SD-FD pair.

For given layer k, information based on the following equation may be reported by the UE.

$$W_k(K \times N_3) \;=\; W_1W^{\sim}{}_kW_{f,k}{}^H \quad (Y4)$$

For $W_1$(K×2L), each matrix block is formed by L columns of a K×K identity matrix. The base station transmits K beamformed CSI-RS ports. In the type 2 PS codebook of Rel. 16, each port is associated with an SD beam. In contrast, in the type 2 PS codebook of Rel. 16, each port is associated with an SD-FD pair. The UE selects L ports from K ports, and reports, as part of PMI($W_{y,x}$), the selected ports to the base station.

$W^{\sim}{}_k$(2L×M$_v$) is a matrix formed by LC coefficient (subband complex LC coefficient) vectors for layer k. UP to K$_0$ NZCs are reported. The report is formed by two parts: a bitmap for identifying an NZC location, and a quantized NZC. In the type 2 PS codebook of Rel. 16, the bitmap of the NZC location is always reported. In contrast, in the type 2 PS codebook of Rel. 17, the bitmap in a specific case can be omitted. The specific case is a case in which the number of reported NZCs is equal to a maximum number $K_1 * M * v$ ($v \le 2$).

$W_{f,k}$ ($N_3 \times M_v$) is a matrix formed by $M_v$ FD base (FD DFT base) vectors for layer k. $M_v$ is 1 or 2. The base station can determine presence or absence (on/off) of $W_{f,k}$. When $W_{f,k}$ is on ($M_v = 2$), $M_v$ additional FD bases are reported. When $W_{f,k}$ is off ($M_v = 1$, $W_{f,k}$ being off, and $W_{f,k}$ being on when $M_v = 1$ are the same), no additional FD bases are reported. When $M_v = 2$, $M_v$ FD bases are selected/reported out of an RRC-configured window size N (N is 2 or 4). In Rel. 16, $W_{f,k}$ is always reported.

(Rel-17 NCJT CSI)

Joint transmission (JT) may mean simultaneous data transmission from a plurality of points (for example, TRPs) to a single UE.

Rel. 17 supports NCJT from two TRPs. PDSCHs from the two TRPs may be independently precoded and independently decoded. Frequency resources may be non-overlapping, partially overlapping (partial-overlapping), or fully overlapping (full-overlapping). When overlapping occurs, the PDSCH from one TRP interferes with the PDSCH from another TRP.

An applicable scenario is single-DCI-based MTRP NCJT with the type 1 single-panel codebook. For NCJT CSI measurement, in single CSI-ReportConfig, two CMR groups with each channel measurement resource (CMR) from one TRP can be configured. One CSI report mode can include two modes.

CSI-ReportConfig for Rel-17 non-coherent joint transmission (NCJT) CSI configures the CMRs and the CSI report mode (csi-ReportMode), using RRC signaling.

Two CMR groups with ($K_s = K_1 + K_2$) CMRs are configured for the UE. $2 \le K_s \le 8$ holds. $K_s$ CMRs correspond to the NZP-CSI-RS resource set for channel measurement. $K_1$ and $K_2$ are each the number of CMRs in two CMR groups. Through selection out of all possible pairs, N (N sets of) CMR pairs are configured by a higher layer. N = 1 and $K_s = 2$ are supported. Support of $N_{max} = 2$ is an optional feature of the UE. Support of $K_{S,max} = X$ is an optional feature of the UE. Each CMR can include up to 32 CSI-RS ports, depending on a UE capability. Each CMR pair is associated with one CRI value.

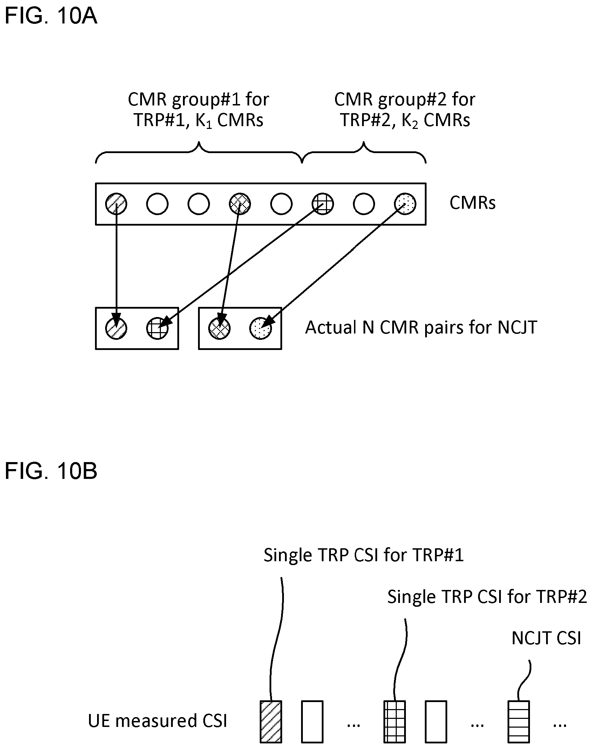

As shown in the example of FIG. 10A, the bitmap by RRC signaling indicates one CMR from each CMR group and thereby indicates N (N = 1, 2) CMR pairs to be actually used for NCJT measurement. As shown in the example of FIG. 10B, the UE measures single TRP CSI for TRP1 and single TRP CSI for TRP2 by using the CMRs in two CMR groups, and measures the NCJT CSI by using N CMR pairs.

The UE selects one or more pieces of CSIs to be reported, based on the mode configured by csi-ReportMode. csi-ReportMode indicates one of two modes of the following modes 1 and 2.

At least one of the following modes 1 and 2 is supported.

{Mode 1}

The UE may be configured to report X pieces of CSI associated with a single-TRP measurement hypothesis and one piece of CSI associated with an NCJT measurement hypothesis. X = 0, 1, 2. When X = 2, two pieces of CSI are associated with two different single-TRP measurement hypotheses with a plurality of CMRs from a plurality of different CMR groups. Support of X = 1, 2 is an optional UE feature for the UE supporting Option 1.

{Mode 2}

The UE is configured to report one piece of CSI associated with the best one out of NCJT and single-TRP measurement hypotheses.

In mode 1, the UE reports X+1 pieces of CSI as a total number including X (X = 0, 1, 2) pieces of single TRP CSI and one piece of NCJT CSI. In mode 2, the UE reports one best piece of CSI (one piece of CSI) out of all of the pieces of single TRP CSI and one piece of NCJT CSI.

In one CSI report, up to two pieces of single TRP CSI and one piece of NCJT CSI can be reported (mode 1 with X = 2). The NCJT CSI includes one CRI, two RIs (with one joint RI index), two PMIs, two LIs, and one CQI (four layers or less). The single TRP CSI is the same as existing CSI, and includes one CRI, one RI/PMI/LI, and one or two CQIs (eight layers or less, one CQI for each CW).

For some of the following cases, new mapping orders (tables) with a plurality of fields in one CSI report are defined.

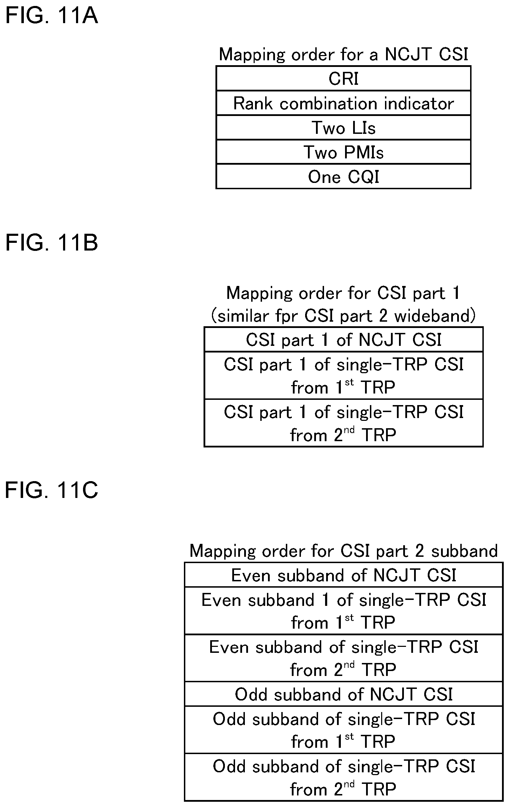

- Mapping order of wideband CSI for mode 1 with X = 0 (FIG. 11A). The wideband CSI is supported only for mode 1 with X = 0, that is, the NCJT CSI.
- Mapping order of CSI part 1 for modes 1 and 2 (FIG. 11B).
- CSI part 2 wideband mapping order for modes 1 and 2 (similar to FIG. 11B).

- CSI part 2 subband mapping order for modes 1 and 2 (FIG. 11C).

(CJT)

For Rel. 18, support of CJT using up to four TRPs is under study. Data from four TRPs may be coherently precoded and transmitted to the UE on the same time-frequency resource. For example, the same precoding matrix may be used in consideration of channels from four TRPs. Coherent may mean that phases of a plurality of received signals have a certain relationship with each other. Signal quality may be improved by using 4-TRP joint precoding, and there may be no interference between the four TRPs places. The data may receive only interference outside the four TRPs.

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the respective four TRPs to the UE are different from each other. Thus, it is difficult to perform the dynamic indication only by reporting one piece of aggregated CSI indicating a joint channel matrix.

In consideration of operation for fallback to NCJT (that is, a single TRP), CSI per TRP (that is, single-TRP CSI such as NCJT CSI of Rel. 17) is also conceivable.

(CJT CSI)

Based on the assumption of ideal backhaul, synchronization, and the same number of antenna ports over a plurality of TRPs, CSI acquisition for coherent joint transmission (CJT) for FR1 and up to four TRPs is under study. For CJT multi-TRP for FDD, improvement of a type 2 codebook of Rel. 16/17 is under study.

As CSI enhancement for CJT, the following is under study.

- CMR and IMR for measurement of up to four TRPs
- CSI per TRP with inter-TRP CSI feedback for X-TRP CJT
- Inter-TRP CSI: new feedback and codebook for inter-TRP phasing matrix / inter-TRP amplitude matrix / inter-TRP matrix (including both amplitude and phase)
- Additional reportable x-TRP CJT CQI

As multi-TRP CJT CSI, the following is under study.

- Limitation to configuration for CMR/CSI for each TRP
- Inter-TRP CSI/PMI (for example, inter-TRP phase with/without inter-TRP amplitude)

{Option 1} Independent codebook and feedback in addition to Rel-16/17 type 2 codebook
{Option 2} $W_2$ of inter-TRP CSI/PMI communicated with/in $W_k \sim W_{f,k}{}^H$ Common/different FD bases for a plurality of TRPs.

As multi-panel type 2 CSI for multi-TRP CJT, the following is under study.

- Enhancement to a multi-panel of the Rel-16/17 type 2 codebook and the type 2 PS codebook.
- New antenna configuration for a type 2 multi-panel codebook.

$W_1$ (SD bases) / $W_f$ (FD bases) for respective TRPs may be the same or different from each other. $W_k$ (NZCs) for the respective TRPs may be different from each other. $W_1/W_f/W_k$ for the respective TRPs may be selected jointly or individually. It is preferable that different scenarios with different options are present for designs of $W_1/W_f/W_k$. $W_\varphi$ may be reported as an individual content, or may be reported in $W_k$. These used policies relate to an arrangement scenario (for example, intra-site multi-TRP or inter-site multi-TRP).

For example, a precoding matrix for 4-TRP CJT CSI (codebook) may be indicated by $W_1/W_f/W_k$ for the respective TRPs. $W_1$ for the respective TRPs may be the same or different from each other, and may be selected jointly or individually. $W_k$ for the respective TRPs may be different from each other, and may be selected jointly or individually. $W_f$ for the respective TRPs may be the same or different from each other, and may be selected jointly or individually.

(Analysis #1)

The type 2 codebook (codebook structure) for the CJT multi-TRP (mTRP) may be at least one of some of the following alternatives, or may be a combination of a few out of some of the following alternatives.

{Alternative 1A} (Codebook Structure 1A)

SD/FD base selection per TRP/per TRP group (port group or resource) + relative phase relationship (co-phasing) (including at least one of wideband and subband)/amplitude relationship (co-amplitude).

For example, the codebook structure is given by the following expression.

$$\begin{bmatrix} (a_1 p_1) \times W_{1,1} \widetilde{W}_{2,1} W_{1,1}^H \\ \vdots \\ (a_N p_N) \times W_{1,N} \widetilde{W}_{2,N} W_{1,N}^H \end{bmatrix} \qquad (Z1)$$

Here, N is the number of TRPs or TRP groups. $\alpha_r$ is an amplitude relationship (co-amplitude). $p_r$ is a phase relationship (co-phase). The codebook includes a special case of $\alpha_r = p_r = 1$ (no co-scaling) or $\alpha_r = 0$.

{Alternative 1B} (Codebook Structure 1B)

Joint SD/FD base selection per TRP/per TRP group (port group or resource) + relative phase relationship (including at least one of wideband and subband)/amplitude relationship.

For example, the codebook structure is given by the following expression.

$$\begin{bmatrix} (a_1 p_1) \times W_{SF,1} \widetilde{W}_{2,1} \\ \vdots \\ (a_N p_N) \times W_{SF,N} \widetilde{W}_{2,N} \end{bmatrix} \qquad (Z2)$$

Here, N is the number of TRPs or TRP groups. $\alpha_r$ is an amplitude relationship (co-amplitude). $p_r$ is a phase relationship (co-phase). The codebook includes a special case of $\alpha_r = p_r = 1$ (no co-scaling) or $\alpha_r = 0$.

{Alternative 2} (Codebook Structure 2)

SD base selection per TRP/TRP group (port group or resource) and joint FD base selection (over N TRPs).

For example, the codebook structure is given by the following expression.

$$\begin{bmatrix} W_{1,1} & 0 & 0 & 0 \\ 0 & \ddots & 0 & 0 \\ 0 & 0 & \ddots & 0 \\ 0 & 0 & 0 & W_{1,N} \end{bmatrix} \qquad (Z3)$$

Here, N is the number of TRPs or TRP groups.

One of alternatives 1A and 2 of the codebook structure being supported, or both of alternatives 1A and 2 of the codebook structure being supported and one of them being configured by a NW or selected by the UE in a CSI report are considered.

(Analysis #2)

Alternatives 1A and 2 of the codebook structure may include some of the following report contents (CSI fields).

- $W_1$ and SD bases ($i_{1,1}$ and $i_{1,2}$).

In both of alternatives 1A and 2, the SD base is for each TRP. However, at least one of reported $i_{1,1}$ and $i_{1,2}$ may follow one of some of the following options.

{Option 1} A plurality of sets. Each set corresponds to one TRP.
{Option 2} One set having an increased bit-width to include information for a plurality of TRPs.

- $W_f$ and FD bases ($i_{1,5}$ and $i_{1,6,k}$).

In alternative 1A, the FD base is for each TRP. In alternative 2, the FD base is common to a plurality of TRPs. Here, there may be an additional report of a TRP-specific delay offset $j_1$ based on the FD base common to the plurality of TRPs.
- $W_2$ and a bitmap ($i_{1,7,k}$) indicating the NZC.

In both of alternatives 1A and 2, the report contents may follow one of some of the following options.

{Option 1} A long bitmap for all TRPs.
{Option 2} An individual bitmap for each TRP.

- $W_2$, an SCI indicator ($i_{1,8,k}$), and an amplitude ($i_{2,8,k}$) of the SCI.

In both of alternatives 1A and 2, the report contents may follow one of some of the following options.

{Option 1} One SCI across a plurality of TRPs (for each layer, as with the existing fields).
{Option 2} An SCI for each TRP (for each layer, as with the existing fields). An additional indicator $j_2$ of the strongest TRP may be required. An additional indicator $j_3$ of the amplitude relationship (co-amplitude) between the SCIs of two TRPs may be required. An additional indicator $j_4$ of the phase relationship (co-phase) between the SCIs of two TRPs may be required.

- $W_2$ and an amplitude ($i_{2,4,k}$) of another coefficient for each layer.

In both of alternatives 1A and 2, the report contents may follow one of some of the following options.

{Option 1} A plurality of sets. Each set corresponds to one TRP.
{Option 2} One set having an increased bit-width to include information for a plurality of TRPs.

- $W_2$ and a phase ($i_{2,5,k}$) of another coefficient for each layer.

In both of alternatives 1A and 2, the report contents may follow one of some of the following options.

{Option 1} A plurality of sets. Each set corresponds to one TRP.
{Option 2} One set having an increased bit-width to include information for a plurality of TRPs.

Each option may be configured by the NW, may be defined in a specification, or may be reported by the UE.
Basically, each existing report content is increased to a plurality of sets, and each set corresponds to one TRP, or one set is employed for all TRPs. The bit-width of one set may be maintained or may be increased depending on the report content. For alternative 1A/2, a new report content $j_1/j_2/j_3/j_4$ may be present. Each new report content may be configured by the NW, may be defined in a specification, or may be reported by the UE. For alternative 1A/2, the mapping order with the report contents and the bit-width of each report content are not clarified.
As described above, studies have not sufficiently been made on a report of CJT CSI. Unless such studies are sufficiently made, communication throughput reduction/communication quality degradation may be caused.

In view of this, the inventors of the present invention came up with the idea of a method of reporting CJT CSI.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, "to have a capability of **...**" may be interchangeably interpreted as "to support/report a capability of ...".

In the present disclosure, a panel, a base station (gNB) panel, and a TRP may be interchangeably interpreted.

In the present disclosure, a network (NW), a base station, a gNB, and a TRP may be interchangeably interpreted.

In the present disclosure, time domain resource allocation and time domain resource assignment may be interchangeably interpreted.

In the present disclosure, a beam, an SD beam, an SD vector, and an SD 2D-DFT vector may be interchangeably interpreted. L, 2L, the number of SD beams, the number of beams, and the number of SD 2D-DFT vectors may be interchangeably interpreted.

In the present disclosure, an FD base, an FD DFT base, a DFT base, and $f_i$ may be interchangeably interpreted. In the present disclosure, an FD beam, an FD vector, an FD base vector, an FD DFT base vector, and a DFT base vector may be interchangeably interpreted.

In the present disclosure, a coefficient, an LC coefficient, a combination coefficient, a subband complex LC coefficient, a combination coefficient matrix, amplitude and phase, and an amplitude coefficient and a phase coefficient may be interchangeably interpreted. In the present disclosure, an NZC, a non-zero coefficient, a non-zero LC coefficient, a non-zero amplitude coefficient, and a complex coefficient may be interchangeably interpreted.

In the present disclosure, co-phasing, phase compensation, phasing, phase difference, and a phase relationship may be interchangeably interpreted. In the present disclosure, co-amplitude, amplitude compensation, amplitude adjustment, an amplitude ratio, and an amplitude relationship may be interchangeably interpreted. In the present disclosure, a difference, a ratio, and a relative value may be interchangeably interpreted.

In the present disclosure, layer k and layer l may be interchangeably interpreted.

In the present disclosure, a size and a length may be interchangeably interpreted.

In the present disclosure, a TRP, a transmission point, a TCI state, and a reference signal may be interchangeably interpreted.

(Radio Communication Method)

In each of the respective embodiments, a TRP, a CMR, a CMR group, a CRI, and a CRI group may be interchangeably interpreted.

In each of the respective embodiments, X TRPs, X-TRP, X panels, and $N_g$ panels may be interchangeably interpreted. In each of the respective embodiments, CJT using X TRPs, CJT using X panels, and X-TRP CJT may be interchangeably interpreted.

In each of the respective embodiments, reference CSI, CSI for a reference TRP, and CSI to be reported first may be interchangeably interpreted. In each of the respective embodiments, a reference TRP, CSI corresponding to reference CSI, a TRP corresponding to CSI to be reported first, and a CSI-RS resource / CMR / CMR group / CSI-RS resource set corresponding to CSI to be reported first may be interchangeably interpreted. In each of the respective embodiments, a TRP, a CSI-RS resource, a CMR, a CMR group, and a CSI-RS resource set may be interchangeably interpreted.

In each of the respective embodiments, a strongest TRP and a TRP with the strongest amplitude (SCI) among all TRPs may be interchangeably interpreted.

In each of the respective embodiments, multi-TRP, multi-panel, intra-site multi-TRP, and inter-site multi-TRP may be interchangeably interpreted.

In each of the respective embodiments, inter-TRP, inter-panel, inter-TRP difference, and inter-TRP comparison may be interchangeably interpreted.

In each of the respective embodiments, inter-TRP CSI, inter-TRP CJT CSI, inter-panel CSI, CSI for another TRP relative to CSI for a reference TRP, and CSI for another TRP relative to CSI for a reference panel may be interchangeably interpreted. In each of the respective embodiments, per-TRP CSI and per-panel CSI may be interchangeably interpreted.

In each of the respective embodiments, an inter-TRP phase index and an inter-TRP co-phasing (phasing) index may be interchangeably interpreted. In each of the respective embodiments, an inter-TRP index and an inter-TRP coefficient index may be interchangeably interpreted. In each of the respective embodiments, an inter-TRP phase matrix and an inter-TRP co-phasing (phasing) matrix may be interchangeably interpreted. In each of the respective embodiments, an inter-TRP matrix and an inter-TRP coefficient matrix may be interchangeably interpreted. In each of the respective embodiments, an inter-TRP phase codebook and an inter-TRP co-phasing (phasing) codebook may be interchangeably interpreted. In each of the respective embodiments, an inter-TRP codebook and an inter-TRP coefficient codebook may be interchangeably interpreted.

In each of the respective embodiments, a target resource, a CMR, a CSI-RS resource, an NZP-CSI-RS resource, a CMR group, a CSI-RS resource set, an NZP-CSI-RS resource set, and a TRP may be interchangeably interpreted.

Each of the respective embodiments may be applied to a subband report, or may be applied to a wideband report.

Each of the respective embodiments may be applied to the type 2 codebook, or may be applied to the type 2 port selection codebook.

The UE may receive a configuration of a report of channel state information (CSI) for a plurality of transmission points (for example, TRPs). The UE may determine a position and a bit-width for a plurality of indicators in the CSI, in accordance with at least one of a transmission point, a layer, an indicator in the CSI, and the number of the plurality of transmission points.

<Embodiment #1>

The present embodiment relates to mapping order of a plurality of CSI fields of CSI part 1 of one CSI report.

In the mapping order, for at least one of layer 0, layer 1, and all layers, the indicator of the number of non-zero wideband amplitude coefficients may follow at least one of some of the following options.

{Option 1} Each indicator includes information for a plurality of TRPs. For example, the indicator of the number for layer 0 may mean the total number for layer 0 for all TRPs.

{Option 2} The indicator is an individual indicator for each TRP. The order may follow at least one of some of the following options.

{{Option 2a}} Indicators for layer 0, layer 1, and all layers of a first TRP, and subsequently indicators for layer 0, layer 1, and all layers of a second TRP, ....

{{Option 2b}} Indicators for layer 0 for the first TRP, the second TRP, the third TRP, and the fourth TRP, and subsequently indicators for layer 1 for the first TRP, the second TRP, the third TRP, and the fourth TRP, ....

In the mapping order, the CRI may follow at least one of some of the following options.

{Option 1} The field includes CRI information of a plurality of TRPs. For example, the field indicates indices of combinations of N selected TRPs.

{Option 2} There is an individual field for each TRP. The order is the CRI of the strongest TRP, the CRI of the second strongest TRP, ....

For different codebook structures of alternative 1A/2, different options may be used, or different options may be configured for the UE by the NW.

A UE capability related to support of an individual indicator for each TRP may be introduced.

<<Example 1>>

For CSI part 1 on the PUCCH, for different codebook structures of alternative 1A/2, the same new mapping order (table) may be defined in a specification, or a different/individual new mapping order (table) may be defined in a specification. The CJT CSI may correspond to subband CSI, instead of wideband CSI, based on the enhanced type 2 CSI.

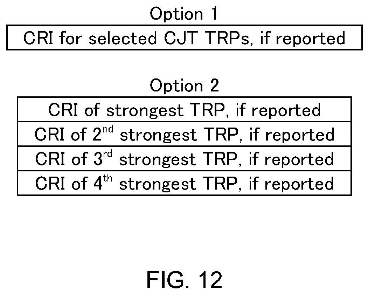

In the mapping order (table, FIG. 5) of CSI part 1 on the PUCCH, the part of CRI may be changed to one of options 1 and 2 of FIG. 12.

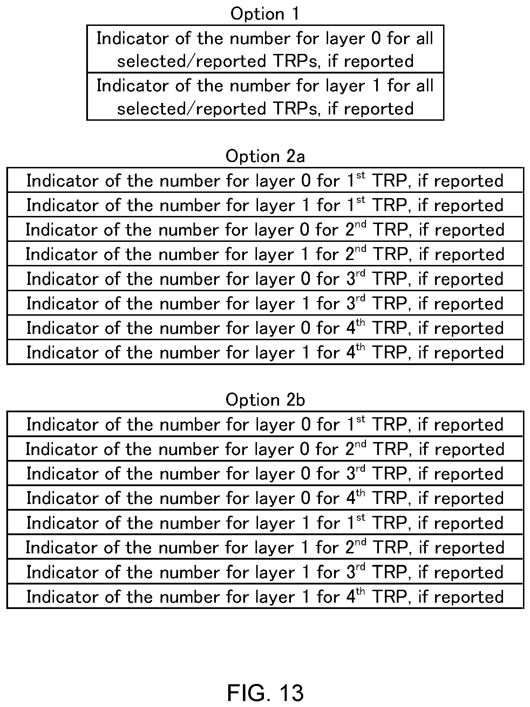

In the mapping order (table, FIG. 5) of CSI part 1 on the PUCCH, the part of the indicator of the number of non-zero wideband amplitude coefficients may be changed to one of options 1, 2a, and 2b of FIG. 13.

<<Example 2>>

For CSI part 1 on the PUSCH, for different codebook structures of alternative 1A/2, the same new mapping order (table) may be defined in a specification, or a different/individual new mapping order (table) may be defined in a specification. The CJT CSI may correspond to subband CSI, instead of wideband CSI, based on the enhanced type 2 CSI.

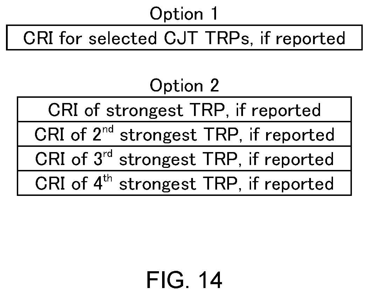

In the mapping order (table, FIG. 6) of CSI part 1 on the PUSCH, the part of CRI may be changed to one of options 1 and 2 of FIG. 14.

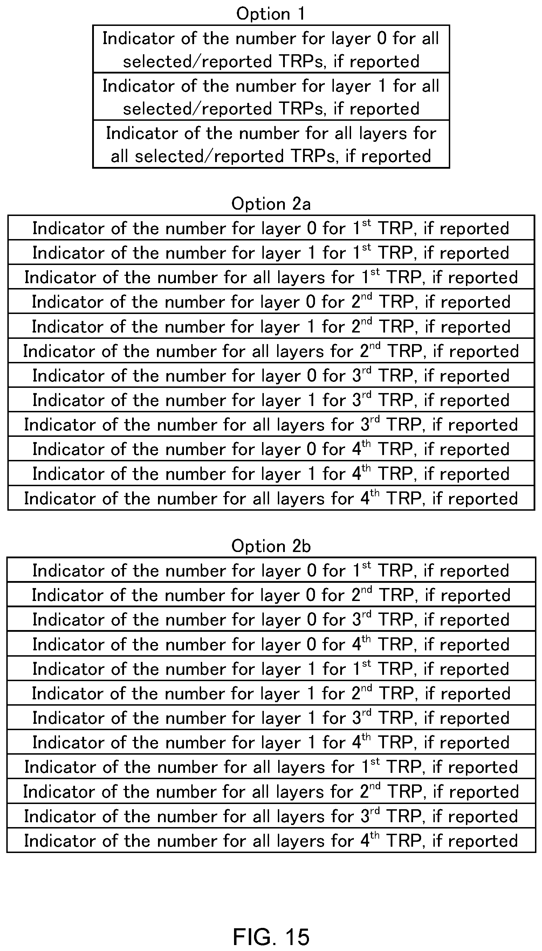

In the mapping order (table, FIG. 6) of CSI part 1 on the PUSCH, the part of the indicator of the number of non-zero wideband amplitude coefficients may be changed to one of options 1, 2a, and 2b of FIG. 15.

According to the present embodiment, the UE can appropriately report CSI part 1.

<Embodiment #2>

The present embodiment relates to mapping order of a plurality of CSI fields of CSI part 2 of one CSI report on the PUSCH.

In the mapping order, the plurality of PMI fields $X_1$ in group 0 may follow at least one of some of the following options. $X_1$ may include the indicator of the SD base and the indicator of the SCI for each layer.

{Option 1} Each existing indicator may include information for a plurality of TRPs (to be selected/reported). In this case, for the CJT CSI, a new bit-width (table) for the PMI may be defined. For alternatives 1A and 2 of the codebook structure, a common bit-width may be defined, or an individual bit-width may be defined. In this case, the table of the mapping order need not be enhanced/changed.

{Option 2} The indicator is an individual indicator for each TRP. The indicator may follow at least one of some of the following options.

{{Option 2a}} For the PMI, a new bit-width (table) of each indicator for each TRP is defined. The mapping order may initially be order of the TRPs for each indicator, or may initially be order of the indicators for each TRP. In this case, the table of the mapping order need not be enhanced/changed.

{{Option 2b}} The table of the mapping order is enhanced/changed in consideration of $X_1$ from a plurality of TRPs.

In the mapping order, the plurality of PMI fields $X_2$ in group 1/2 may follow at least one of some of the above options for $X_1$.

For different codebook structures of alternative 1A/2, different options may be used, or different options may be configured for the UE by the NW.

A UE capability related to support of an individual indicator for each TRP may be introduced.

<<Example 1>>

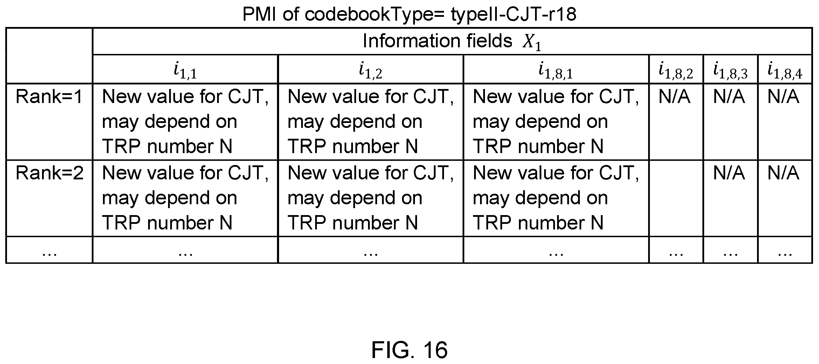

For option 1 of the plurality of PMI fields $X_1$, as shown in the example of FIG. 16, for the type 2 CJT CSI (codebookType = typeII-CJT-r18), values of new bit-widths may be defined for $i_{1,1}$, $i_{1,2}$, and $i_{1,8,1}$.

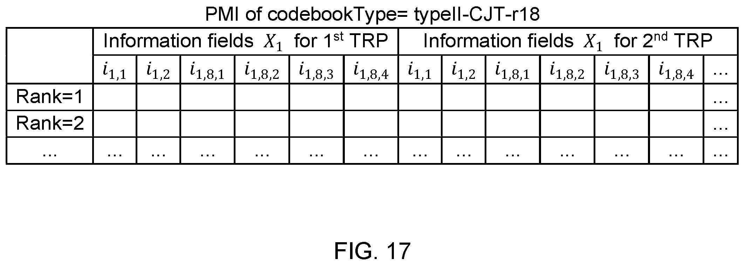

For option 2a of the plurality of PMI fields $X_1$, as shown in the example of FIG. 17, for the type 2 CJT CSI (codebookType = typeII-CJT-r18), $i_{1,1}$, $i_{1,2}$, $i_{1,8,1}$, $i_{1,8,2}$, $i_{1,8,3}$, and $i_{1,8,4}$ for one TRP may initially be mapped.

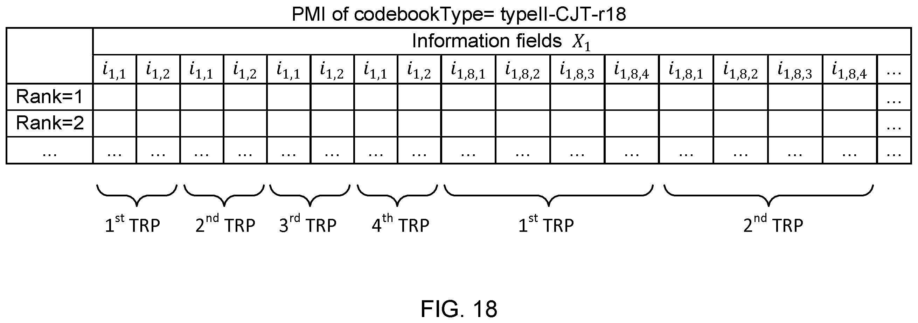

For option 2a of the plurality of PMI fields $X_1$, as shown in the example of FIG. 18, for the type 2 CJT CSI (codebookType = typeII-CJT-r18), ($i_{1,1}$ and $i_{1,2}$)may initially be mapped in the order of the TRPs, and subsequently ($i_{1,8,1}$, $i_{1,8,2}$, $i_{1,8,3}$, and $i_{1,8,4}$) may be mapped in the order of the TRPs.

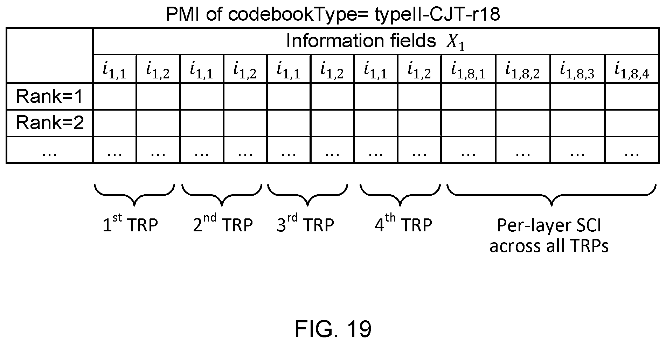

For option 2a of the plurality of PMI fields $X_1$, as shown in the example of FIG. 19, for the type 2 CJT CSI (codebookType = typeII-CJT-r18), ($i_{1,1}$ and $i_{1,2}$)may initially be mapped in the order of the TRPs, and subsequently the SCIs ($i_{1,8,1}$, $i_{1,8,2}$, $i_{1,8,3}$ and $i_{1,8,4}$) for each layer across all TRPs may be mapped. In this case, only one set of the SCIs may be required. Depending on whether one set corresponds to a plurality of TRPs or a plurality of sets correspond thereto, different indicators may have different designs.

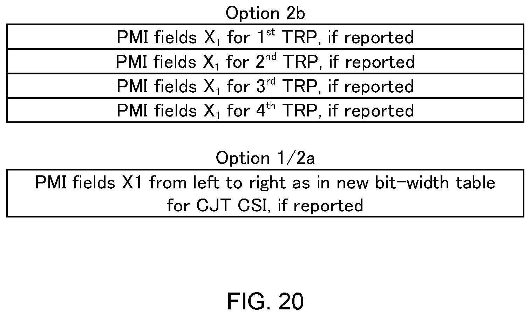

For option 2b of group 0 (plurality of PMI fields $X_1$), in the mapping order (table, FIG. 7) of CSI part 2 on the PUSCH, the part of the CRI may be changed to option 2b or option 1/2a of FIG. 20.


<<Example 2>>

Regarding a new bit-width table, an example for the plurality of PMI fields $X_2$ may be similar to an example for the plurality of PMI fields $X_1$. Depending on whether one set corresponds to a plurality of TRPs or a plurality of sets correspond thereto, different options may be applied to each indicator.

Regarding the table of the new mapping order, an example for group 1/2 may be similar to an example for group 0. Different options may be applied to groups 0, 1, and 2.

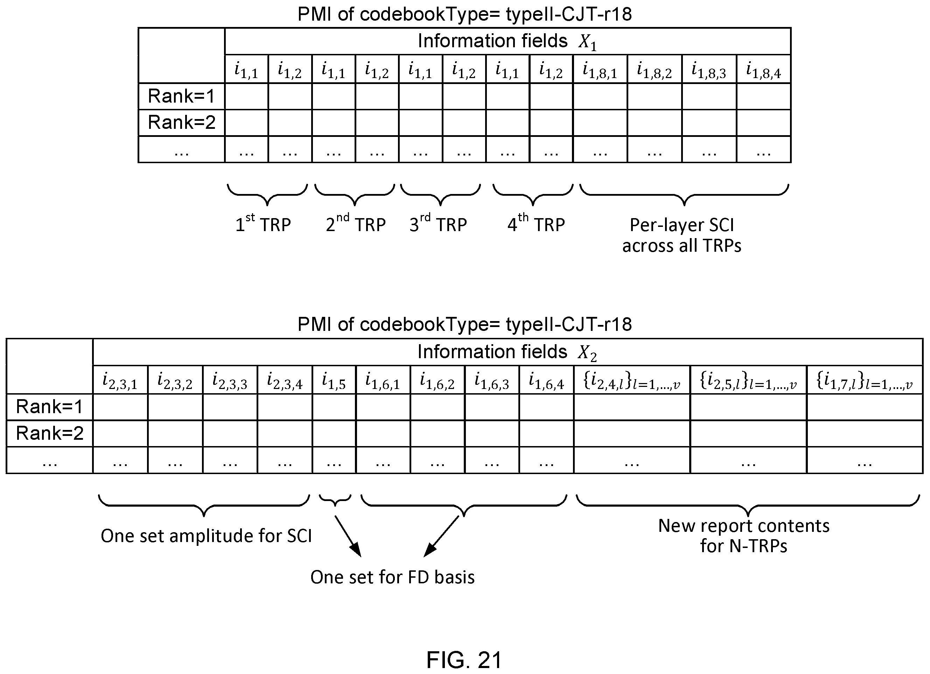

The new bit-width table defined for N-TRP (N TRPs) CJT may reuse most of the part of an existing table (option 2a). As shown in the example of FIG. 21, when option 2a (SCIs for each layer across all TRPs, FIG. 19) is used for the plurality of PMI fields $X_1$, for the plurality of PMI fields $X_2$, bit-widths for one set ($i_{2,3,1}$, $i_{2,3,2}$, $i_{2,3,3}$, and $i_{2,3,4}$) for the amplitude of the SCIs, one set ($i_{1,5}$, $i_{1,6,1}$, $i_{1,6,2}$, $i_{1,6,3}$, and $i_{1,6,4}$) for the FD bases, and new report contents ($\{i_{2,4,l}\}_{l=1,...v}$, $\{i_{2,5,l}\}_{l=1,...v}$, and $\{i_{1,7,l}\}_{l=1,...v}$) for N TRPs may be defined.

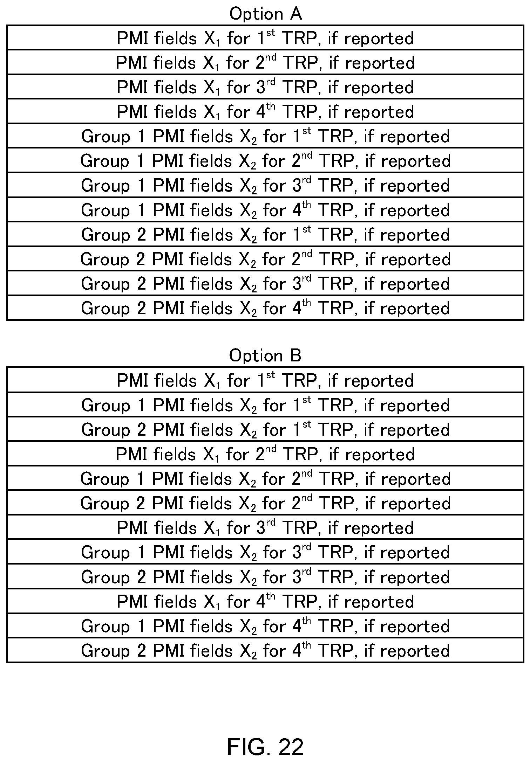

The mapping order (table) may be enhanced (option 2b). For group 0 (plurality of PMI fields $X_1$), the mapping order (table, FIG. 7) of CSI part 2 on the PUSCH may be changed in a manner similar to option A or B of FIG. 22. In option A, group 0 is initially mapped in the order of the TRPs, subsequently group 1 is mapped in the order of the TRPs, and subsequently group 2 is mapped in the order of the TRPs. In option B, groups 0, 1, and 2 for the first TRP are initially mapped, and subsequently mapping is performed in the order of the TRPs.

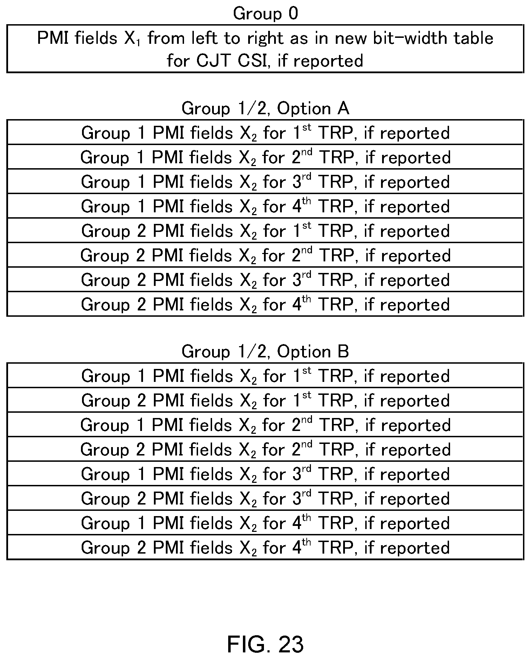

Different options may be used for group 0 and groups 1 and 2. Group 0 (plurality of PMI fields $X_1$) may include information of a plurality of TRPs, and groups 1 and 2 (plurality of PMI fields $X_2$) may include information of each TRP. In the mapping order (table, FIG. 7) of CSI part 2 on the PUSCH, the part of group 0 may be changed in a manner similar to group 0 of FIG. 23, and the part of groups 1 and 2 may be changed in a manner similar to option A or B of group 1/2 of FIG. 23. In option A, group 1 is initially mapped in the order of the TRPs, and subsequently group 2 is mapped in the order of the TRPs. In option B, groups 1 and 2 for the first TRP are initially mapped, and subsequently mapping is performed in the order of the TRPs.

According to the present embodiment, the UE can appropriately report CSI part 2 on the PUSCH.


<Embodiment #3>

The present embodiment relates to a bit-width of a new report content.

When a new report content is supported/configured, a bit-width of each new report content is defined, and the bit-width may be defined in a table for at least one of the plurality of PMI fields $X_1$ (group 0) and the plurality of PMI fields $X_2$ (groups 1 and 2).

$j_1$ (or $j_{1,k}$ specific to a layer (layer k)) may be included in the plurality of PMI fields $X_2$ related to selection of the FD base. $j_1$ may be for each TRP. An FD base offset may be omitted, considering that the strongest TRP is a reference TRP that starts from offset 0. In a case of N TRPs, N-1 sets of $j_1$ may be required. For example, $j_{1,k,n}$ may mean $j_1$ for a k-th layer and an n-th TRP.

$j_2$ may be included in the plurality of PMI fields $X_1$ or the plurality of PMI fields $X_2$, or may be included in CSI part 1.

$j_3/j_4$ (or $j_{3,k}/j_{4,k}$ specific to a layer (layer k)) may be included in the plurality of PMI fields $X_1$ or the plurality of PMI fields $X_2$, or may be included in CSI part 1. Similarly to $j_1$, in a case of N TRPs, N-1 sets of $j_3/j_4$ may be required. In the bit-width table of the plurality of PMI fields $X_2$, $j_3/j_4$ may be arranged next to "amplitude of SCI for each layer". New group x may be added for $j_3/j_4$. For example, in the table of the mapping order, new group 3/4 for $j_3/j_4$ may be arranged after group 2/3. For example, in the table of the mapping order, new group 0' for $j_3/j_4$ may be arranged after group 0.

Based on at least one of whether a new report content is required and which option of Embodiment #1/#2 is used, different codebook structures of alternative 1A/2 may be used. The codebook structure of alternative 1A/2 may be configured for the UE by the NW.

A UE capability related to support of at least one of the new report content and an individual indicator for each new report content and each TRP may be introduced.

<<Examples>>

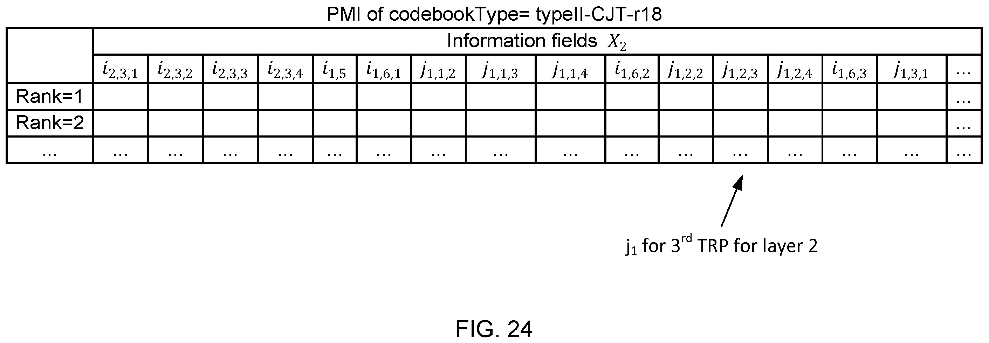

In the new bit-width table, $i_{l,k,n}$ may be included in the plurality of PMI fields $X_2$. As shown in the example of FIG. 24, in the new bit-width table of the plurality of PMI fields $X_2$, $(j_{1,k,2}, j_{1,k,3}$, and $j_{1,k,4})$ for the k-th layer and the second, third, and fourth TRPs may be arranged after $i_{1,6,k}$ for the k-th layer.

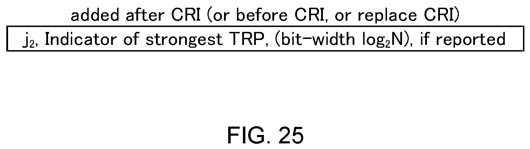

In the mapping order (table, FIG. 6) of CSI part 1 on the PUSCH, $j_2$ as in the example of FIG. 25 may be arranged after the CRI. $j_2$ may be arranged before the CRI. Instead of the CRI, $j_2$ may be arranged.

According to the present embodiment, the UE can appropriately report a new report content.

<Supplement>

[Notification of Information to UE]

Notification of any piece of information (from the network (NW) (for example, the base station (BS)) to the UE (i.e., reception of any piece of information in the UE from the BS) in the above-described embodiments may be performed using physical layer signaling (for example, DCI), higher layer signaling (for example, RRC signaling, a MAC CE), a specific signal/channel (for example, a PDCCH, a PDSCH, a reference signal), or a combination of these.

When the notification is performed using a MAC CE, the MAC CE may be identified by a new logical channel ID (LCID) not provided in existing standards being included in a MAC subheader.

When the notification is performed using DCI, the notification may be performed using a specific field in the DCI, a radio network temporary identifier (RNTI) used to scramble cyclic redundancy check (CRC) bits added to the DCI, a format of the DCI, or the like.

Notification of any piece of information to the UE in the above-described embodiments may be periodically, semi-persistently, or aperiodically performed.

[Notification of Information from UE]

Notification of any piece of information from the UE (to the NW) (i.e., transmission/reporting of any piece of information in the UE to the BS) in the above-described embodiments may be performed using physical layer signaling (for example, UCI), higher layer signaling (for example, RRC signaling, a MAC CE), a specific signal/channel (for example, a PUCCH, a PUSCH, a PRACH, a reference signal), or a combination of these.

When the notification is performed using a MAC CE, the MAC CE may be identified by a new LCID not provided in existing standards being included in a MAC subheader.

When the notification is performed using UCI, the notification may be transmitted using a PUCCH or a PUSCH.

Notification of any piece of information from the UE in the above-described embodiments may be periodically, semi-persistently, or aperiodically performed.

[Application of Each Embodiment]

At least one of the above-described embodiments may be applied when a specific condition is satisfied. The specific condition may be provided in a standard, or may be notified to the UE/BS using higher layer signaling/physical layer signaling.

At least one of the above-described embodiments may be applied only to the UE that has reported a specific UE capability or that supports the specific UE capability.

The specific UE capability may indicate at least one of the following:

- Support of an individual indicator for each TRP.
- Support of at least one of a new report content and an individual indicator for each new report content and each TRP.

The specific UE capability may be capability applied over all the frequencies (commonly irrespective of frequency), may be capability per frequency (for example, one or a combination of a cell, a band, a band combination, a BWP, a component carrier, and the like), may be capability per frequency range (for example, Frequency Range 1 (FR1), FR2, FR3, FR4, FR5, FR2-1, FR2-2), may be capability per subcarrier spacing (SCS), or may be capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when specific information related to the above-described embodiments (or performing operation of the above-described embodiments) is configured/activated/triggered for the UE by higher layer signaling/physical layer signaling. For example, the specific information may be information indicating enabling of the functions of each embodiment, any RRC parameter for specific release (for example, Rel. 18/19), or the like.

When not supporting at least one of the specific UE capabilities or not configured with the specific information, the UE may apply operation of Rel. 15/16, for example.

(Supplementary Note)

Regarding one embodiment of the present disclosure, the following supplementary notes of the invention will be given.

{Supplementary Note 1}

A terminal including:

a receiving section that receives a configuration of a report of channel state information (CSI) for a plurality of transmission points; and
a control section that determines a position and a bit-width for a plurality of indicators in the CSI, in accordance with at least one of a transmission point, a layer, an indicator in the CSI, and the number of the plurality of transmission points.

{Supplementary Note 2}

The terminal according to supplementary note 1, wherein the position is a position in CSI part 1 or in CSI part 2.

{Supplementary Note 3}

The terminal according to supplementary note 1 or 2, wherein in the CSI, positions of a plurality of values of the plurality of indicators are adjacent to each other for a same transmission point.

{Supplementary Note 4}

The terminal according to any one of supplementary notes 1 to 3, wherein in the CSI, positions of a plurality of values for the plurality of transmission points are adjacent to each other for a same indicator.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

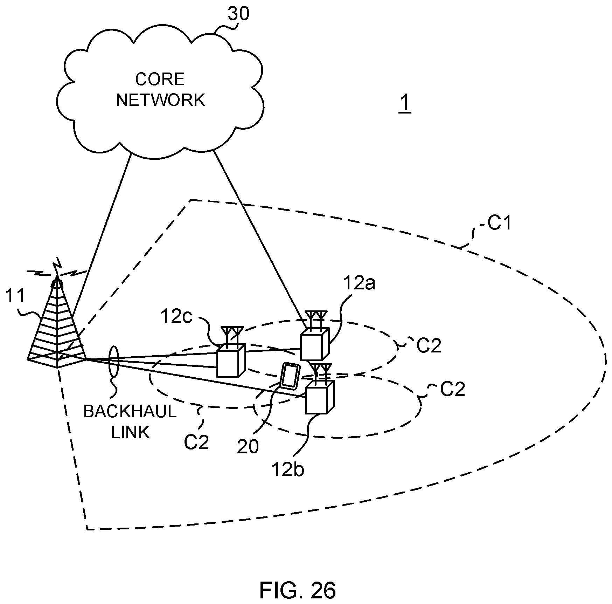

FIG. 26 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

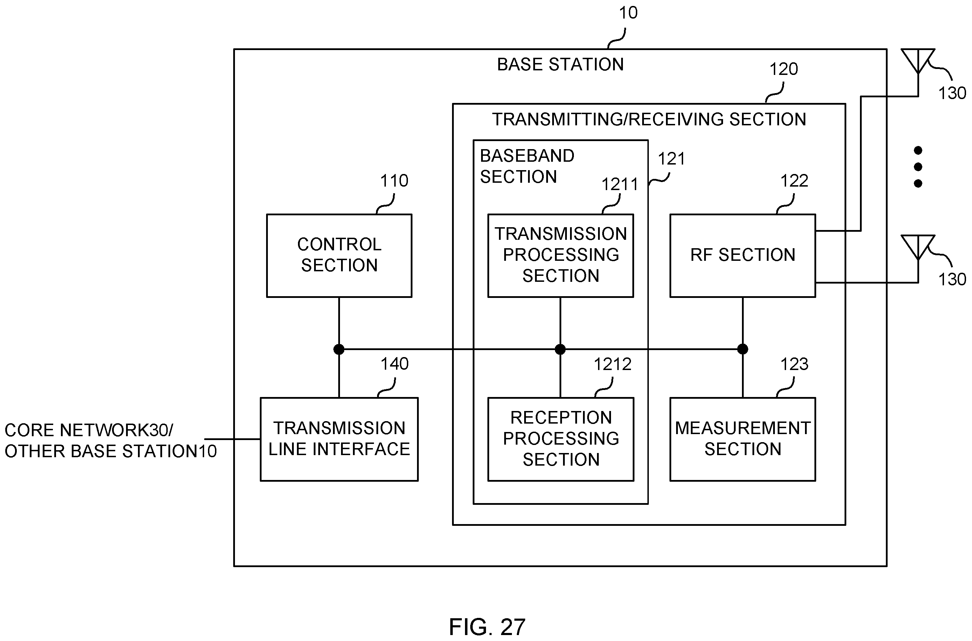

FIG. 27 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration of a report of channel state information (CSI) for a plurality of transmission points. The control section 110 may determine a position and a bit-width for a plurality of indicators in the CSI, in accordance with at least one of a transmission point, a layer, an indicator in the CSI, and the number of the plurality of transmission points.

(User Terminal)

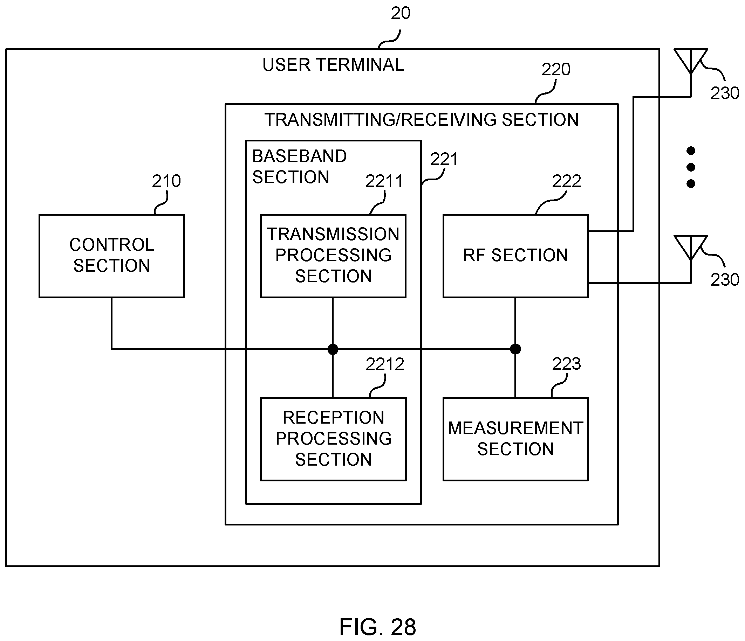

FIG. 28 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), or the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a report of channel state information (CSI) for a plurality of transmission points. The control section 210 may determine a position and a bit-width for a plurality of indicators in the CSI, in accordance with at least one of a transmission point, a layer, an indicator in the CSI, and the number of the plurality of transmission points.

The position may be a position in CSI part 1 or in CSI part 2.

In the CSI, positions of a plurality of values of the plurality of indicators may be adjacent to each other for a same transmission point.

In the CSI, positions of a plurality of values for the plurality of transmission points may be adjacent to each other for a same indicator.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

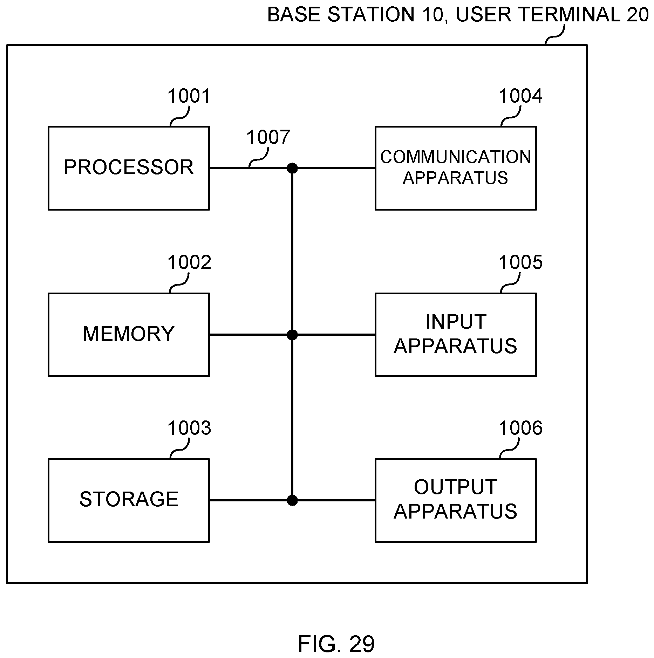

For example, a base station, a user terminal, and so on according to one embodiment of the present disclosure may function as a computer that executes the processes of the radio communication method of the present disclosure. FIG. 29 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

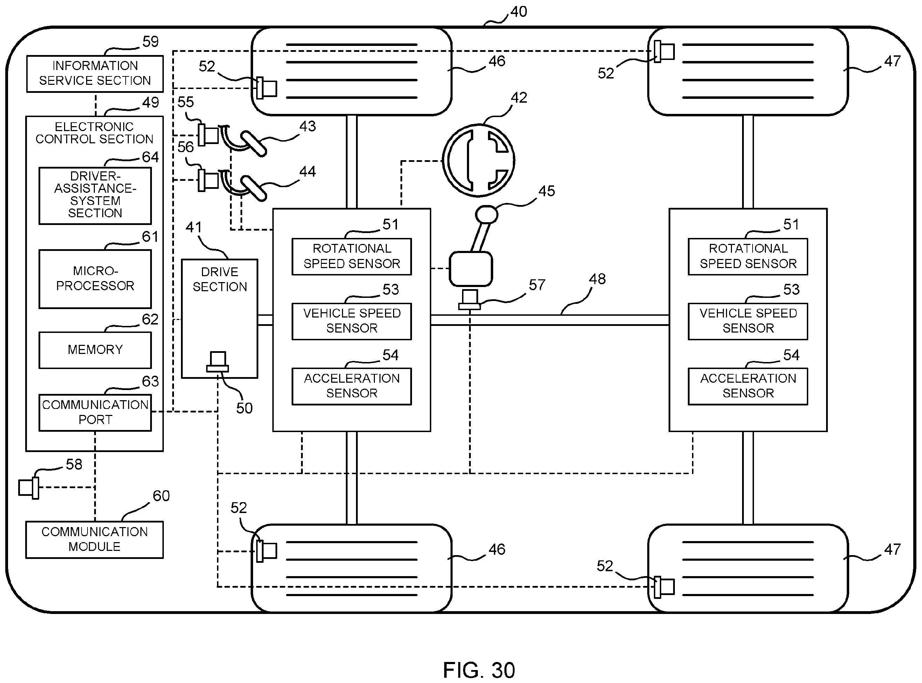

FIG. 30 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-133337, filed on August 24, 2022, the contents of which are incorporated herein by reference in their entirety.

**Claims**

1. A terminal comprising:

   a receiving section that receives a configuration of a report of channel state information (CSI) for a plurality of transmission points; and
   a control section that determines a position and a bit-width for a plurality of indicators in the CSI, in accordance with at least one of a transmission point, a layer, an indicator in the CSI, and the number of the plurality of transmission points.

2. The terminal according to claim 1, wherein
   the position is a position in CSI part 1 or in CSI part 2.

3. The terminal according to claim 1, wherein
   in the CSI, positions of a plurality of values of the plurality of indicators are adjacent to each other for a same transmission point.

4. The terminal according to claim 1, wherein
   in the CSI, positions of a plurality of values for the plurality of transmission points are adjacent to each other for a same indicator.

5. A radio communication method for a terminal, the radio communication method comprising:

receiving a configuration of a report of channel state information (CSI) for a plurality of transmission points; and determining a position and a bit-width for a plurality of indicators in the CSI, in accordance with at least one of a transmission point, a layer, an indicator in the CSI, and the number of the plurality of transmission points.

6. A base station comprising:

a transmitting section that transmits a configuration of a report of channel state information (CSI) for a plurality of transmission points; and
a control section that determines a position and a bit-width for a plurality of indicators in the CSI, in accordance with at least one of a transmission point, a layer, an indicator in the CSI, and the number of the plurality of transmission points.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | $1$ |

FIG. 2

PMI of codebookType= typeII-r16

| | Information fields $X_1$ | | | | | |
|---|---|---|---|---|---|---|
| | $i_{1,1}$ | $i_{1,2}$ | $i_{1,8,1}$ | $i_{1,8,2}$ | $i_{1,8,3}$ | $i_{1,8,4}$ |
| Rank=1 $N_3 \leq 19$ | $\lceil \log_2(O_1 O_2) \rceil$ | $\left\lceil \log_2 \binom{N_1 N_2}{L} \right\rceil$ | $\lceil \log_2 K^{NZ} \rceil$ | N/A | N/A | N/A |
| Rank=2 $N_3 \leq 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | N/A | N/A |
| … | … | … | … | … | … | … |

FIG. 3

EP 4 580 076 A1

| | Information fields $X_2$ | | | | |
|---|---|---|---|---|---|
| | $i_{2,3,1}$ | $i_{2,3,2}$ | $i_{2,3,3}$ | $i_{2,3,4}$ | $i_{1,5}$ |
| Rank=1 $N_3 \leq 19$ | 4 | N/A | N/A | N/A | N/A |
| Rank=2 $N_3 \leq 19$ | 4 | 4 | N/A | N/A | N/A |
| ... | ... | ... | ... | ... | ... |

| | Information fields $X_2$ | | | | | | |
|---|---|---|---|---|---|---|---|
| | $i_{1,6,1}$ | $i_{1,6,2}$ | $i_{1,6,3}$ | $i_{1,6,4}$ | $\{i_{2,4,l}\}_{l=1,\ldots,\upsilon}$ | $\{i_{2,5,l}\}_{l=1,\ldots,\upsilon}$ | $\{i_{1,7,l}\}_{l=1,\ldots,\upsilon}$ |
| Rank=1 $N_3 \leq 19$ | $\left\lceil \log_2 \binom{N_3 - 1}{M_1 - 1} \right\rceil$ | N/A | N/A | N/A | $3(K^{NZ} - 1)$ | $4(K^{NZ} - 1)$ | $2LM_1$ |
| Rank=2 $N_3 \leq 19$ | $\left\lceil \log_2 \binom{N_3 - 1}{M_2 - 1} \right\rceil$ | $\left\lceil \log_2 \binom{N_3 - 1}{M_2 - 1} \right\rceil$ | N/A | N/A | $3(K^{NZ} - 2)$ | $4(K^{NZ} - 2)$ | $4LM_2$ |
| ... | ... | ... | ... | ... | ... | ... | ... |

FIG. 4

**Mapping order of CSI fields of one CSI report, CSI part 1,**
*pmi-FormatIndicator= subbandPMI* **or** *cqi-FormatIndicator=subbandCQI*

| CSI report number | CSI fields |
|---|---|
| CSI report #n CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction and if reported |
| Note: Subbands for given CSI report *n* indicated by the higher layer parameter *csi-ReportingBand* are numbered continuously in the increasing order with the lowest subband of *csi-ReportingBand* as subband 0. | |

FIG. 5

**Mapping order of CSI fields of one CSI report, CSI part 1**

| CSI report number | CSI fields |
|---|---|
| CSI report #n CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction and if reported |
| | Indicator of the total number of non-zero coefficients summed across all layers $K^{NZ}$, if reported |
| Note: | Subbands for given CSI report *n* indicated by the higher layer parameter *csi-ReportingBand* are numbered continuously in the increasing order with the lowest subband of *csi-ReportingBand* as subband 0. |

FIG. 6

**Mapping order of CSI fields of one CSI report, CSI part 2 of *codebookType=typeII-r16 or typeII-PortSelection-r16***

| CSI report number | CSI fields |
|---|---|
| CSI report #n CSI part 2, group 0 | PMI fields $X_1$, from left to right, if reported |
| CSI report #n CSI part 2, group 1 | The following PMI fields $X_2$, from left to right: $\{i_{2,3,l}: l = 1, \dots, v\}$, $i_{1,5}$, $\{i_{1,6,l}: l = 1, \dots, v\}$ and $\max(0, \left\lceil \frac{K^{NZ}}{2} \right\rceil - v) \times 3$ highest priority bits of $\{i_{2,4,l}: l = 1, \dots, v\}$, $\max(0, \left\lceil \frac{K^{NZ}}{2} \right\rceil - v) \times 4$ highest priority bits of $\{i_{2,5,l}: l = 1, \dots, v\}$ and $v * 2LM_v - \lfloor K^{NZ}/2 \rfloor$ highest priority bits of $\{i_{1,7,l}: l = 1, \dots, v\}$, in decreasing order of priority based on the corresponding function $\mathrm{Pri}(l, i, f)$, if reported |
| CSI report #n CSI part 2, group 2 | The following PMI fields $X_2$, from left to right: $\min\left(K^{NZ} - v, \left\lceil \frac{K^{NZ}}{2} \right\rceil\right) \times 3$ lowest priority bits of $\{i_{2,4,l}: l = 1, \dots, v\}$, $\min\left(K^{NZ} - v, \left\lceil \frac{K^{NZ}}{2} \right\rceil\right) \times 4$ lowest priority bits of $\{i_{2,5,l}: l = 1, \dots, v\}$ and $\lfloor K^{NZ}/2 \rfloor$ lowest priority bits of $\{i_{1,7,l}: l = 1, \dots, v\}$, in decreasing order of priority based on the corresponding function $\mathrm{Pri}(l, i, f)$, if reported |

FIG. 7

FIG. 8A

Rel.15/16 Type II Port Selection

FIG. 8B

| Port 1 | $b_1$ | $b_1$ | ... |
| Port 2 | $b_2$ | $b_2$ | ... |
| Port 3 | $b_3$ | $b_3$ | ... |
| Port 4 | $b_4$ | $b_4$ | ... |
| Port 5 | $b_5$ | $b_5$ | ... |
| Port 6 | $b_6$ | $b_6$ | ... |
| Port 7 | $b_7$ | $b_7$ | ... |
| Port 8 | $b_8$ | $b_8$ | ... |

Frequency (delay)

EP 4 580 076 A1

## FIG. 9B

| | | |
|---|---|---|
| Port 1 | $b_1f_{1,0}$ | $b_1f_{1,1}$ | ⋮ |
| Port 2 | $b_2f_{2,0}$ | $b_2f_{2,1}$ | ⋮ |
| Port 3 | $b_3f_{3,0}$ | $b_3f_{3,1}$ | ⋮ |
| Port 4 | $b_4f_{4,0}$ | $b_4f_{4,1}$ | ⋮ |
| Port 5 | $b_5f_{5,0}$ | $b_5f_{5,1}$ | ⋮ |
| Port 6 | $b_6f_{6,0}$ | $b_6f_{6,1}$ | ⋮ |
| Port 7 | $b_7f_{7,0}$ | $b_7f_{7,1}$ | ⋮ |
| Port 8 | $b_8f_{8,0}$ | $b_8f_{8,1}$ | ⋮ |

Frequency (delay)

## FIG. 9A

Rel.17 Type II Port Selection

gNB

Port 6

Port 5

Port 4

Port 3

The Same SD beam but different FD beam

FIG. 10A

CMR group#1 for
TRP#1, $K_1$ CMRs

CMR group#2 for
TRP#2, $K_2$ CMRs

CMRs

Actual N CMR pairs for NCJT

FIG. 10B

Single TRP CSI for TRP#1

Single TRP CSI for TRP#2

NCJT CSI

UE measured CSI    ...    ...    ...

## FIG. 11A

Mapping order for a NCJT CSI

| CRI |
|---|
| Rank combination indicator |
| Two LIs |
| Two PMIs |
| One CQI |

## FIG. 11B

Mapping order for CSI part 1
(similar fpr CSI part 2 wideband)

| CSI part 1 of NCJT CSI |
|---|
| CSI part 1 of single-TRP CSI from 1st TRP |
| CSI part 1 of single-TRP CSI from 2nd TRP |

## FIG. 11C

Mapping order for CSI part 2 subband

| Even subband of NCJT CSI |
|---|
| Even subband 1 of single-TRP CSI from 1st TRP |
| Even subband of single-TRP CSI from 2nd TRP |
| Odd subband of NCJT CSI |
| Odd subband of single-TRP CSI from 1st TRP |
| Odd subband of single-TRP CSI from 2nd TRP |

Option 1

| CRI for selected CJT TRPs, if reported |
| --- |

Option 2

| CRI of strongest TRP, if reported |
| --- |
| CRI of $2^{nd}$ strongest TRP, if reported |
| CRI of $3^{rd}$ strongest TRP, if reported |
| CRI of $4^{th}$ strongest TRP, if reported |

# FIG. 12

Option 1

| Indicator of the number for layer 0 for all selected/reported TRPs, if reported |
|---|
| Indicator of the number for layer 1 for all selected/reported TRPs, if reported |

Option 2a

| Indicator of the number for layer 0 for $1^{st}$ TRP, if reported |
|---|
| Indicator of the number for layer 1 for $1^{st}$ TRP, if reported |
| Indicator of the number for layer 0 for $2^{nd}$ TRP, if reported |
| Indicator of the number for layer 1 for $2^{nd}$ TRP, if reported |
| Indicator of the number for layer 0 for $3^{rd}$ TRP, if reported |
| Indicator of the number for layer 1 for $3^{rd}$ TRP, if reported |
| Indicator of the number for layer 0 for $4^{th}$ TRP, if reported |
| Indicator of the number for layer 1 for $4^{th}$ TRP, if reported |

Option 2b

| Indicator of the number for layer 0 for $1^{st}$ TRP, if reported |
|---|
| Indicator of the number for layer 0 for $2^{nd}$ TRP, if reported |
| Indicator of the number for layer 0 for $3^{rd}$ TRP, if reported |
| Indicator of the number for layer 0 for $4^{th}$ TRP, if reported |
| Indicator of the number for layer 1 for $1^{st}$ TRP, if reported |
| Indicator of the number for layer 1 for $2^{nd}$ TRP, if reported |
| Indicator of the number for layer 1 for $3^{rd}$ TRP, if reported |
| Indicator of the number for layer 1 for $4^{th}$ TRP, if reported |

FIG. 13

Option 1

| CRI for selected CJT TRPs, if reported |
|---|

Option 2

| CRI of strongest TRP, if reported |
|---|
| CRI of 2$^{nd}$ strongest TRP, if reported |
| CRI of 3$^{rd}$ strongest TRP, if reported |
| CRI of 4$^{th}$ strongest TRP, if reported |

# FIG. 14

Option 1

| Indicator of the number for layer 0 for all selected/reported TRPs, if reported |
|---|
| Indicator of the number for layer 1 for all selected/reported TRPs, if reported |
| Indicator of the number for all layers for all selected/reported TRPs, if reported |

Option 2a

| Indicator of the number for layer 0 for 1st TRP, if reported |
|---|
| Indicator of the number for layer 1 for 1st TRP, if reported |
| Indicator of the number for all layers for 1st TRP, if reported |
| Indicator of the number for layer 0 for 2nd TRP, if reported |
| Indicator of the number for layer 1 for 2nd TRP, if reported |
| Indicator of the number for all layers for 2nd TRP, if reported |
| Indicator of the number for layer 0 for 3rd TRP, if reported |
| Indicator of the number for layer 1 for 3rd TRP, if reported |
| Indicator of the number for all layers for 3rd TRP, if reported |
| Indicator of the number for layer 0 for 4th TRP, if reported |
| Indicator of the number for layer 1 for 4th TRP, if reported |
| Indicator of the number for all layers for 4th TRP, if reported |

Option 2b

| Indicator of the number for layer 0 for 1st TRP, if reported |
|---|
| Indicator of the number for layer 0 for 2nd TRP, if reported |
| Indicator of the number for layer 0 for 3rd TRP, if reported |
| Indicator of the number for layer 0 for 4th TRP, if reported |
| Indicator of the number for layer 1 for 1st TRP, if reported |
| Indicator of the number for layer 1 for 2nd TRP, if reported |
| Indicator of the number for layer 1 for 3rd TRP, if reported |
| Indicator of the number for layer 1 for 4th TRP, if reported |
| Indicator of the number for all layers for 1st TRP, if reported |
| Indicator of the number for all layers for 2nd TRP, if reported |
| Indicator of the number for all layers for 3rd TRP, if reported |
| Indicator of the number for all layers for 4th TRP, if reported |

FIG. 15

PMI of codebookType= typeII-CJT-r18

| | Information fields $X_1$ | | | | | |
|---|---|---|---|---|---|---|
| | $i_{1,1}$ | $i_{1,2}$ | $i_{1,8,1}$ | $i_{1,8,2}$ | $i_{1,8,3}$ | $i_{1,8,4}$ |
| Rank=1 | New value for CJT, may depend on TRP number N | New value for CJT, may depend on TRP number N | New value for CJT, may depend on TRP number N | N/A | N/A | N/A |
| Rank=2 | New value for CJT, may depend on TRP number N | New value for CJT, may depend on TRP number N | New value for CJT, may depend on TRP number N | | N/A | N/A |
| ... | ... | ... | ... | ... | ... | ... |

FIG. 16

PMI of codebookType= typeII-CJT-r18

| | Information fields $X_1$ for 1st TRP | | | | | | Information fields $X_1$ for 2nd TRP | | | | | | |
|---|---|---|---|---|---|---|---|---|---|---|---|---|---|
| | $i_{1,1}$ | $i_{1,2}$ | $i_{1,8,1}$ | $i_{1,8,2}$ | $i_{1,8,3}$ | $i_{1,8,4}$ | $i_{1,1}$ | $i_{1,2}$ | $i_{1,8,1}$ | $i_{1,8,2}$ | $i_{1,8,3}$ | $i_{1,8,4}$ | ... |
| Rank=1 | | | | | | | | | | | | | ... |
| Rank=2 | | | | | | | | | | | | | ... |
| ... | ... | ... | ... | ... | ... | ... | ... | ... | ... | ... | ... | ... | ... |

FIG. 17

FIG. 18

EP 4 580 076 A1

FIG. 19

Option 2b

| PMI fields $X_1$ for 1st TRP, if reported |
|---|
| PMI fields $X_1$ for 2nd TRP, if reported |
| PMI fields $X_1$ for 3rd TRP, if reported |
| PMI fields $X_1$ for 4th TRP, if reported |

Option 1/2a

| PMI fields X1 from left to right as in new bit-width table for CJT CSI, if reported |
|---|

FIG. 20

PMI of codebookType= typeII-CJT-r18

| | Information fields $X_1$ | | | | | | | | | | | |
|---|---|---|---|---|---|---|---|---|---|---|---|---|
| | $i_{1,1}$ | $i_{1,2}$ | $i_{1,1}$ | $i_{1,2}$ | $i_{1,1}$ | $i_{1,2}$ | $i_{1,1}$ | $i_{1,2}$ | $i_{1,8,1}$ | $i_{1,8,2}$ | $i_{1,8,3}$ | $i_{1,8,4}$ |
| Rank=1 | | | | | | | | | | | | |
| Rank=2 | | | | | | | | | | | | |
| ... | ... | ... | ... | ... | ... | ... | ... | ... | ... | ... | ... | ... |

1st TRP    2nd TRP    3rd TRP    4th TRP    Per-layer SCI across all TRPs

PMI of codebookType= typeII-CJT-r18

| | Information fields $X_2$ | | | | | | | | | | | |
|---|---|---|---|---|---|---|---|---|---|---|---|---|
| | $i_{2,3,1}$ | $i_{2,3,2}$ | $i_{2,3,3}$ | $i_{2,3,4}$ | $i_{1,5}$ | $i_{1,6,1}$ | $i_{1,6,2}$ | $i_{1,6,3}$ | $i_{1,6,4}$ | $\{i_{2,4,l}\}_{l=1,...,v}$ | $\{i_{2,5,l}\}_{l=1,...,v}$ | $\{i_{1,7,l}\}_{l=1,...,v}$ |
| Rank=1 | | | | | | | | | | | | |
| Rank=2 | | | | | | | | | | | | |
| ... | ... | ... | ... | ... | ... | ... | ... | ... | ... | ... | ... | ... |

One set amplitude for SCI    One set for FD basis    New report contents for N-TRPs

FIG. 21

EP 4 580 076 A1

Option A

| |
|---|
| PMI fields $X_1$ for 1st TRP, if reported |
| PMI fields $X_1$ for 2nd TRP, if reported |
| PMI fields $X_1$ for 3rd TRP, if reported |
| PMI fields $X_1$ for 4th TRP, if reported |
| Group 1 PMI fields $X_2$ for 1st TRP, if reported |
| Group 1 PMI fields $X_2$ for 2nd TRP, if reported |
| Group 1 PMI fields $X_2$ for 3rd TRP, if reported |
| Group 1 PMI fields $X_2$ for 4th TRP, if reported |
| Group 2 PMI fields $X_2$ for 1st TRP, if reported |
| Group 2 PMI fields $X_2$ for 2nd TRP, if reported |
| Group 2 PMI fields $X_2$ for 3rd TRP, if reported |
| Group 2 PMI fields $X_2$ for 4th TRP, if reported |

Option B

| |
|---|
| PMI fields $X_1$ for 1st TRP, if reported |
| Group 1 PMI fields $X_2$ for 1st TRP, if reported |
| Group 2 PMI fields $X_2$ for 1st TRP, if reported |
| PMI fields $X_1$ for 2nd TRP, if reported |
| Group 1 PMI fields $X_2$ for 2nd TRP, if reported |
| Group 2 PMI fields $X_2$ for 2nd TRP, if reported |
| PMI fields $X_1$ for 3rd TRP, if reported |
| Group 1 PMI fields $X_2$ for 3rd TRP, if reported |
| Group 2 PMI fields $X_2$ for 3rd TRP, if reported |
| PMI fields $X_1$ for 4th TRP, if reported |
| Group 1 PMI fields $X_2$ for 4th TRP, if reported |
| Group 2 PMI fields $X_2$ for 4th TRP, if reported |

FIG. 22

Group 0

| PMI fields $X_1$ from left to right as in new bit-width table for CJT CSI, if reported |
|---|

Group 1/2, Option A

| Group 1 PMI fields $X_2$ for $1^{st}$ TRP, if reported |
|---|
| Group 1 PMI fields $X_2$ for $2^{nd}$ TRP, if reported |
| Group 1 PMI fields $X_2$ for $3^{rd}$ TRP, if reported |
| Group 1 PMI fields $X_2$ for $4^{th}$ TRP, if reported |
| Group 2 PMI fields $X_2$ for $1^{st}$ TRP, if reported |
| Group 2 PMI fields $X_2$ for $2^{nd}$ TRP, if reported |
| Group 2 PMI fields $X_2$ for $3^{rd}$ TRP, if reported |
| Group 2 PMI fields $X_2$ for $4^{th}$ TRP, if reported |

Group 1/2, Option B

| Group 1 PMI fields $X_2$ for $1^{st}$ TRP, if reported |
|---|
| Group 2 PMI fields $X_2$ for $1^{st}$ TRP, if reported |
| Group 1 PMI fields $X_2$ for $2^{nd}$ TRP, if reported |
| Group 2 PMI fields $X_2$ for $2^{nd}$ TRP, if reported |
| Group 1 PMI fields $X_2$ for $3^{rd}$ TRP, if reported |
| Group 2 PMI fields $X_2$ for $3^{rd}$ TRP, if reported |
| Group 1 PMI fields $X_2$ for $4^{th}$ TRP, if reported |
| Group 2 PMI fields $X_2$ for $4^{th}$ TRP, if reported |

FIG. 23

EP 4 580 076 A1

PMI of codebookType= typeII-CJT-r18

| | Information fields $X_2$ | | | | | | | | | | | | | | | |
|---|---|---|---|---|---|---|---|---|---|---|---|---|---|---|---|---|
| | $i_{2,3,1}$ | $i_{2,3,2}$ | $i_{2,3,3}$ | $i_{2,3,4}$ | $i_{1,5}$ | $i_{1,6,1}$ | $j_{1,1,2}$ | $j_{1,1,3}$ | $j_{1,1,4}$ | $i_{1,6,2}$ | $j_{1,2,2}$ | $j_{1,2,3}$ | $j_{1,2,4}$ | $i_{1,6,3}$ | $j_{1,3,1}$ | ... |
| Rank=1 | | | | | | | | | | | | | | | | ... |
| Rank=2 | | | | | | | | | | | | | | | | ... |
| ... | ... | ... | ... | ... | ... | ... | ... | ... | ... | ... | ... | ... | ... | ... | ... | ... |

$j_1$ for 3$^{rd}$ TRP for layer 2

FIG. 24

added after CRI (or before CRI, or replace CRI)

| $j_2$, Indicator of strongest TRP, (bit-width $\log_2 N$), if reported |
| --- |

FIG. 25

FIG. 26

FIG. 27

EP 4 580 076 A1

FIG. 28

EP 4 580 076 A1

BASE STATION 10, USER TERMINAL 20

1001

PROCESSOR

1007

COMMUNICATION APPARATUS

1004

1002

MEMORY

INPUT APPARATUS

1005

1003

STORAGE

OUTPUT APPARATUS

1006

FIG. 29

FIG. 30

## INTERNATIONAL SEARCH REPORT

| International application No. |
| --- |
| **PCT/JP2023/026957** |

| A. | CLASSIFICATION OF SUBJECT MATTER |
| --- | --- |

*H04B 7/024*(2017.01)i; *H04B 7/0417*(2017.01)i; *H04W 24/10*(2009.01)i; *H04W 28/16*(2009.01)i; *H04W 72/0457*(2023.01)i
FI:    H04B7/024; H04B7/0417; H04W24/10; H04W28/16; H04W72/0457 110

According to International Patent Classification (IPC) or to both national classification and IPC

| B. | FIELDS SEARCHED |
| --- | --- |

Minimum documentation searched (classification system followed by classification symbols)

H04B7/024; H04B7/0417; H04W24/10; H04W28/16; H04W72/0457

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | LENOVO. CSI enhancements for high mobility and coherent JT[online]. 3GPP TSG RAN WG1 #110 R1-2206211. 12 August 2022<br>sections 3.6 | 1-6 |
| A | ERICSSON. CSI enhancements for Multi-TRP and FR1 FDD reciprocity[online]. 3GPP TSG RAN WG1 #107-e R1-2112322. 06 November 2021<br>section 3 | 1-6 |
| A | FRAUNHOFER IIS, FRAUNHOFER HHI. CSI enhancements for medium UE velocities and coherent JT[online]. 3GPP TSG RAN WG1 #110 R1-2206974. 12 August 2022<br>section 3 | 1-6 |
| A | NTT DOCOMO, INC. Discussion on CSI enhancement[online]. 3GPP TSG RAN WG1 #110 R1-2207395. 12 August 2022<br>entire text, all drawings | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 September 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022133337 A

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010